# EUROPEAN PATENT APPLICATION

(11) **EP 4 832 628 A1**
(43) Date of publication of application: **28.10.2026**
(21) Application number: 23962194.9
(22) Date of filing: 20.12.2023
(51) Int. Cl.: H04W 72/20, H04W 16/28

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); OKUMURA, Mamoru, Tokyo 100-6150 (JP); SHIBAIKE, Naoya, Tokyo 100-6150 (JP); NAGATA, Satoshi, Tokyo 100-6150 (JP); SUN, Weiqi, Beijing, 100190 (CN); WANG, Jing, Beijing, 100190 (CN); LI, Xiang, Beijing, 100190 (CN); HOU, Xiaolin, Beijing, 100190 (CN); CHEN, Lan, Beijing,100190 (CN)
(74) Representative: Hoffmann Eitle
(86) International application number: PCT/JP2023/045734
(87) International publication number: WO 2025/134273

(57) **Abstract**

A terminal according to an aspect of the present disclosure includes a receiving section that receives one or more commands indicating a plurality of transmission configuration indicator (TCI) states, and receives downlink control information indicating one TCI state among the plurality of TCI states, and a control section that controls reception or transmission using the one TCI state, in which the plurality of TCI states are associated with a plurality of cell identifiers.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (NPL 1). Furthermore, the specifications of LTE-Advanced (3GPP Rel. 10 to 14) have been drafted for the purpose of further increasing capacity and advancement of LTE (third generation partnership project (3GPP (registered trademark)) release (Rel.) 8 and 9).

Successor systems to LTE (for example, also referred to as 5th generation mobile communication system (5G), 5G+ (plus), 6th generation mobile communication system (6G), New Radio (NR), or 3GPP Rel. 15 and subsequent releases) are also being studied.

### Citation List

### Non Patent Literature

NPL 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In a future radio communication system (for example, NR, 6G, or the like), it has been studied that a terminal (user terminal (user terminal), user equipment (UE)) performs cell-free communication of performing communication by using a unit different from that of an existing cell.

However, specific studies on cell-free communication are not sufficient. In a case where such studies are not sufficient, improvement in communication quality/communication throughput may be suppressed.

Therefore, an object of the present disclosure is to provide a terminal, a radio communication method, and a base station that perform appropriate communication by using a unit different from that of an existing cell.

### Solution to Problem

A terminal according to an aspect of the present disclosure includes a receiving section that receives one or more commands indicating a plurality of transmission configuration indicator (TCI) states, and receives downlink control information indicating one TCI state among the plurality of TCI states, and a control section that controls reception or transmission using the one TCI state, in which the plurality of TCI states are associated with a plurality of cell identifiers.

### Advantageous Effects of Invention

According to one aspect of the present disclosure, appropriate communication is performed by using a unit different from an existing cell.

### Brief Description of Drawings

[FIG. 1] Figs. 1A and 1B are diagrams illustrating an outline of MIMO.
[FIG. 2] Figs. 2A and 2B are diagrams illustrating an outline of a cellular system and a cell-free system.
[FIG. 3] Figs. 3A to 3C are diagrams illustrating an example of an outline of each assumption of a cell-free configuration.
[FIG. 4] Fig. 4 illustrates an example of a TCI state list according to option 1 of Embodiment 1.
[FIG. 5] Fig. 5 illustrates an example of a TCI state list according to option 2-1 of Embodiment 1.
[FIG. 6] Fig. 6 illustrates an example of a TCI state list according to option 2-2 of Embodiment 1.
[FIG. 7] Fig. 7 illustrates an example of mapping between an active TCI state and a codepoint of a TCI field according to option 1 of Embodiment 2.
[FIG. 8] Fig. 8 illustrates an example of mapping between an active TCI state and a codepoint of a TCI field according to option 2 of Embodiment 2.
[FIG. 9] Fig. 9 illustrates an example of mapping between an active TCI state and a codepoint of a TCI field according to option 3 of Embodiment 2.
[FIG. 10] Fig. 10 illustrates an example of mapping between an active TCI state and a codepoint of a TCI field according to option 4 of Embodiment 2.
[FIG. 11] Fig. 11 illustrates an example of mapping between an active TCI state and a codepoint of a TCI field according to option 1 of Embodiment 3.
[FIG. 12] Fig. 12 illustrates an example of mapping between an active TCI state and a codepoint of a TCI field according to option 2 of Embodiment 3.
[FIG. 13] Fig. 13 illustrates an example of mapping between an active TCI state and a codepoint of a TCI field according to option 3 of Embodiment 3.
[FIG. 14] Fig. 14 illustrates an example of mapping between an active TCI state and a codepoint of a TCI field according to option 4 of Embodiment 3.
[FIG. 15] Fig. 15 illustrates an example of update of an active TCI state in Embodiment 4.
[FIG. 16] Fig. 16 illustrates another example of update of an active TCI state in Embodiment 4.
[FIG. 17] Figs. 17A to 17C illustrate an example of an indication of a TCI state used for transmission in Embodiment 4.
[FIG. 18] Fig. 18 illustrates an example of mapping between an active TCI state and a codepoint of a TCI field according to option 1 of Embodiment 5.
[FIG. 19] Fig. 19 illustrates an example of update of a subset of an active TCI state according to option 1 of Embodiment 6.
[FIG. 20] Fig. 20 illustrates an example of update of a subset of an active TCI state according to option 2 of Embodiment 6.
[FIG. 21] Fig. 21 illustrates an example of update of a subset of an active TCI state according to option 3 of Embodiment 6.
[FIG. 22] Fig. 22 is a diagram illustrating an example of a schematic configuration of a radio communication system according to one embodiment.
[FIG. 23] Fig. 23 is a diagram illustrating an example of a configuration of a base station according to one embodiment.
[FIG. 24] Fig. 24 is a diagram illustrating an example of a configuration of a user terminal according to one embodiment.
[FIG. 25] Fig. 25 is a diagram illustrating an example of a hardware configuration of the base station and the user terminal according to one embodiment.
[FIG. 26] Fig. 26 is a diagram illustrating an example of a vehicle according to one embodiment.

### Description of Embodiments

### (TCI, Spatial Relation, and QCL)

In NR, controlling reception processing (for example, at least one of reception, demapping, demodulation, and decoding) and transmission processing (for example, at least one of transmission, mapping, precoding, modulation, and coding) in a UE of at least one of a signal and a channel (expressed as a signal/channel) based on a transmission configuration indication state (TCI state) is being studied.

The TCI state may represent what is applied to a downlink signal/channel. A state corresponding to the TCI state applied to an uplink signal/channel may be expressed as a spatial relation.

The TCI state is information on a quasi-co-location (QCL) of the signal/channel and may also be referred to as a spatial Rx parameter, spatial relation information, or the like. The TCI state may be configured in the UE for each channel or each signal.

The QCL is an indicator indicating a statistical property of the signal/channel. For example, this may mean that, when a given signal/channel and another signal/channel have a QCL relationship, it may be assumed that at least one of a Doppler shift, a Doppler spread, an average delay, a delay spread, and a spatial parameter (for example, the spatial Rx parameter) is the same (the QCL related to at least one of the foregoing) between the plurality of different signals/channels.

It is noted that the spatial Rx parameter may correspond to a UE reception beam (for example, a reception analog beam), and the beam may be specified based on a spatial QCL. A QCL (or at least one element of the QCL) in the present disclosure is interchangeable with a spatial QCL (sQCL).

A plurality of types of QCL (QCL types) may be defined. For example, four QCL types A to D with different parameters (or parameter sets) that can be assumed to be the same may be provided.

It may be referred to as a QCL assumption for the UE to assume that a given control resource set (CORESET), channel, or reference signal has a specific QCL (for example, QCL type D) relationship with another CORESET, channel, or reference signal.

Based on a TCI state of the signal/channel or the QCL assumption, the UE may also determine at least one of a transmission beam (Tx beam) and a reception beam (Rx beam) of the corresponding signal/channel.

The TCI state may be, for example, information regarding the QCL between a target channel (in other words, a reference signal (RS) for the corresponding channel) and another signal (for example, another RS). The TCI state may be configured (indicated) by higher layer signaling, physical layer signaling, or a combination thereof.

The physical layer signaling may be, for example, downlink control information (DCI).

A channel for which a TCI state or spatial relation is configured (specified) may be, for example, at least one of a physical downlink shared channel (PDSCH), a physical downlink control channel (PDCCH), a physical uplink shared channel (PUSCH), and a physical uplink control channel (PUCCH).

Furthermore, an RS having a QCL relationship with the channel may be, for example, at least one of a synchronization signal block (SSB), a channel state information reference signal (CSI-RS), a measurement reference signal (sounding reference signal (SRS)), a tracking CSI-RS (also called a tracking reference signal (TRS)), and a QCL detection reference signal (also called a QRS).

The SSB is a signal block including at least one of a primary synchronization signal (PSS), a secondary synchronization signal (SSS), and a broadcast channel (physical broadcast channel (PBCH)). The SSB may be called an SS/PBCH block.

An RS of QCL type X in a TCI state may mean an RS in a QCL type X relationship with (DMRS of) a given channel/signal, and this RS may be called a QCL source of the QCL type X in the corresponding TCI state.

In the present disclosure, that a port (antenna port) of a signal (resource, channel) is QCLed with an RS (DL RS, QCL source RS), that there is a QCL relationship between the port of the signal and the RS, that the signal is QCLed with the RS, that the signal is QCLed with the RS in the TCI state, that the signal is QCLed with the RS in the TCI state for a specific QCL type, that the signal is associated with the TCI state, that the TCI state is configured/indicated for the signal, and that the UE assumes that the port of the signal is QCLed with the RS in the TCI state may be interchangeable with each other.

In the present disclosure, a beam, an SD beam, a spatial domain index, precoding, a precoder, a quasi co-location (QCL) assumption, a QCL relationship, a transmission configuration indicator (TCI) state, a spatial domain filter, a spatial domain reception filter, a spatial domain transmission filter, a reference signal (RS), and a spatial reception parameter may be interchangeable with each other.

### (Unified/Common TCI Framework)

According to the unified TCI framework, multiple types (UL/DL) of channels/RSs can be controlled by a common framework. The unified TCI framework may indicate the common beam (common TCI state) and apply the indicated common beam to all UL and DL channels, or apply the common beam for UL to all UL channels and apply the common beam for DL to all DL channels, instead of defining the TCI state or spatial relation for each channel as in Rel. 15.

One common beam for both DL and UL, or the common beam for DL and the common beam for UL (two common beams in total) have been studied.

The UE may assume the same TCI state (joint TCI state, joint TCI pool, joint common TCI pool, joint TCI state set) for UL and DL. The UE may assume different TCI states (separate TCI state, separate TCI pool, UL separate TCI pool and DL separate TCI pool, separate common TCI pool, UL common TCI pool, and DL common TCI pool) for each of UL and DL.

The UL and DL default beams may be aligned by beam management based on MAC CE (MAC CE level beam indication). The default TCI state of the PDSCH may be updated to match a default UL beam (spatial relation).

Beam management based on the DCI (DCI level beam indication) may indicate the common beam/unified TCI state from the same TCI pool (joint common TCI pool, joint TCI pool, set) for both UL and DL. X (> 1) TCI states may be activated by the MAC CE. The UL/DL DCI may select one from the X active TCI states. The selected TCI state may be applied to the channels/RSs of both UL and DL.

The TCI pool (set) may be a plurality of TCI states configured by an RRC parameter, or may be a plurality of TCI states (active TCI state, active TCI pool, set) activated by the MAC CE among the plurality of TCI states configured by the RRC parameter. Each TCI state may be a QCL type A/D RS. The SSB, the CSI-RS, or the SRS may be configured as the QCL type A/D RS.

The number of TCI states corresponding to each of one or more TRPs may be defined. For example, the number N (≥ 1) of TCI states (UL TCI states) applied to the UL channel/RS and the number M (≥ 1) of TCI states (DL TCI states) applied to the DL channel/RS may be defined. At least one of N and M may be notified/configured/indicated to the UE via higher layer signaling/physical layer signaling.

In the present disclosure, when described as N = M = X (X is any integer), it may mean that the UE is notified/configured/indicated of a TCI state (joint TCI state) common to X (corresponding to X TRPs) ULs and DLs. In addition, when described as N = X (X is any integer) and M = Y (Y is any integer, Y = X may be possible), it may mean that X (corresponding to X TRPs) UL TCI states and Y (corresponding to Y TRPs) DL TCI states (that is, separate TCI state) are respectively notified/configured/indicated to the UE.

For example, when described as N = M = 1, it may mean that a TCI state common to one UL and DL for a single TRP is notified/configured/indicated to the UE (joint TCI state for a single TRP).

In addition, for example, when described as N = 1 and M = 1, it may mean that one UL TCI state and one DL TCI state for a single TRP are separately notified/configured/indicated to the UE (separate TCI state for a single TRP).

In addition, for example, when described as N = M = 2, it may mean that a TCI state common to a plurality of (two) ULs and DLs for a plurality of (two) TRPs is notified/configured/indicated to the UE (joint TCI state for a plurality of TRPs).

In addition, for example, when described as N = 2 and M = 2, it may mean that a plurality of (two) UL TCI states and a plurality of (two) DL TCI states for a plurality of (two) TRPs are notified/configured/indicated to the UE (separate TCI state for a plurality of TRPs).

It is noted that, in the above example, the case where the values of N and M are 1 or 2 has been described, but the values of N and M may be 3 or more, and may be different for N and M.

It has been studied that N = M = 1 is supported in Rel. 17. For example, it is supported to indicate one common beam (for example, a common beam) by RRC/MAC CE/DCI, and the one common beam may be applied to a plurality of DL/UL channels/reference signals. In addition, other cases may be supported in and after Rel. 18.

In the joint DL/UL TCI state (for example, Joint DL/UL TCI state), the RRC parameter (information element) configures a plurality of TCI states for both DL and UL. The MAC CE may activate a plurality of TCI states among the configured plurality of TCI states. The DCI may indicate one of the plurality of TCI states activated.

The DCI may be UL DCI (for example, the DCI used for scheduling the PUSCH) or DL DCI (for example, the DCI used for scheduling the PDSCH). The indicated TCI state may be applied to at least one (or all) of the UL/DL channels/RSs. One piece of DCI may indicate both UL TCI and DL TCI.

One indicated TCI state ID may be one TCI state applied to both UL and DL, or may be two TCI states applied to UL and DL, respectively.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

It is noted that, in the present disclosure, a higher layer parameter (RRC parameter) for configuring the plurality of TCI states may be referred to as configuration information for configuring the plurality of TCI states, and may be simply referred to as "configuration information". In addition, in the present disclosure, the indication of one of the plurality of TCI states by using the DCI may be receiving indication information instructing one of the plurality of TCI states included in the DCI, or may be simply receiving "indication information".

In the separate TCI state (for example, separate TCI (DL TCI state and UL TCI state)), the RRC parameter configures a plurality of TCI states (joint common TCI pool) for both DL and UL. The MAC CE may activate a plurality of TCI states (active TCI pool) among the configured plurality of TCI states. Active TCI pools (separate) for UL and DL may be configured/activated.

DL DCI or a new DCI format may select (indicate) one or more (for example, one) TCI states. The selected TCI state may be applied to one or more (or all) DL channels/RSs. The DL channel may be PDCCH/PDSCH/CSI-RS. The UE may determine the TCI state of each channel/RS of the DL using the operation of the TCI state in Rel. 16 (TCI framework). UL DCI or a new DCI format may select (indicate) one or more (for example, one) TCI states. The selected TCI state may be applied to one or more (or all) UL channels/RSs. The UL channel may be PUSCH/SRS/PUCCH. In this way, different pieces of DCI may separately indicate UL TCI and DL DCI.

In Rel. 17 NR or later, it is assumed that the MAC CE/DCI supports activation/indication of beams to TCI states associated with different physical cell identifiers (PCI). In addition, in Rel. 18 NR or later, it is assumed that an indication to change the serving cell to a cell having a different PCI is supported by MAC CE/DCI.

The joint TCI state and the separate (DL/UL) TCI state may be switched and applied. Which one of the joint TCI state and the separate TCI state is applied may be configured by higher layer parameters from the base station to the UE, or may be switched by a TCI field (TCI state ID) in the DCI.

The unified TCI framework supports the following modes 1 to 3.
[Mode 1] MAC CE-based TCI state indication
[Mode 2] DCI based TCI state indication with DL assignment (DCI based TCI state indication by DCI format 1_1/1_2 with DL assignment)
[Mode 3] DCI based TCI state indication without DL assignment (DCI based TCI state indication by DCI format 1_1/1_2 without DL assignment)

The DCI in the mode 2/mode 3 may be referred to as beam indication DCI.

In the present disclosure, a TCI state indicated by the DCI, an indicated TCI state, an indication TCI state, a unified TCI state, a TCI state applied to multiple types of channels/signals, a joint TCI state (for DL and UL), a DL TCI state, a UL TCI state, a Rel. 17 TCI state, a common TCI state, a single unified TCI state to be configured, and a single unified TCI state to be activated may be interchangeable with each other.

In the present disclosure, a TCI state configured by the RRC parameter, a configured TCI state, a configuration TCI state, a TCI state not following a unified TCI state, a TCI state other than a unified TCI state, a TCI state/spatial relation configured for a specific channel/signal, and an individual TCI state may be interchangeable with each other.

The unified/common TCI state may mean an indication TCI state indicated by using DCI/MAC CE/RRC (In Rel. 17).

The indication TCI state may be shared with at least one of UE-specific reception on the PDSCH/PDCCH (updated by using Rel. 17 DCI/MAC CE/RRC), a PUSCH of a dynamic grant (DCI)/configuration (configured) grant, and a plurality of (for example, all) dedicated PUCCH resources. The TCI state indicated by the DCI/MAC CE/RRC may be referred to as an indication TCI state.

In a case where the indication TCI state is supported (In Rel. 17), a TCI state other than the unified TCI state may mean a TCI state (configuration TCI state) configured by using MAC CE/RRC (In Rel. 17).

The configuration TCI state need not be shared with at least one of UE-specific reception on the PDSCH/PDCCH (updated by using Rel. 17 DCI/MAC CE/RRC), the PUSCH of the dynamic grant (DCI)/configuration (configured) grant, and a plurality of (for example, all) dedicated PUCCH resources. The configuration TCI state may be configured in the RRC/MAC CE for each CORESET/for each resource/for each resource set, and the configuration TCI state may not be updated even if the above-described indication TCI state is updated.

It has been studied that the Indication TCI state is applied to UE-specific channels/signals (RSs). In addition, it has been studied to notify the UE of whether to apply either the indication TCI state or the configuration TCI state to a non-UE-specific channel/signal by using higher layer signaling (RRC signaling).

It has been studied that the RRC parameter related to the configuration TCI state (TCI state ID) has the same configuration as the RRC parameter of the TCI state in Rel. 15/16. It has been studied that the configuration TCI state is configured/indicated for each CORESET/for each resource/for each resource set by using RRC/MAC CE. Further, it has been studied that the UE determines the configuration/indication based on a specific parameter.

It has been studied that update of the indication TCI state and update of the configuration TCI state are separately performed for the UE. For example, for the UE, in a case where the unified TCI state for the indication TCI state is updated, the configuration TCI state need not be updated. Furthermore, it has been studied that the UE determines the update on the basis of a specific parameter.

In addition, it has been studied that, for the PDCCH/PDSCH, switching whether the indication TCI state is applied or the indication TCI state is not applied (the configuration TCI state is applied, and a TCI state that is configured separately from the indication TCI state is applied) is performed by using higher layer signaling (RRC/MAC CE).

In addition, for an intra-cell beam indication (TCI state indication), it has been studied that the indication TCI state is supported for a UE-specific CORESET and a PDSCH related to the CORESET, and a non-UE-specific CORESET and a PDSCH related to the CORESET.

In addition, for an inter-cell beam indication (for example, L1/L2 intercell mobility), it has been studied that the indication TCI state is supported for a UE-specific CORESET and a PDSCH related to the CORESET.

In Rel. 15, whether to indicate the TCI state for CORESET#0 was dependent on implementation of the base station. In Rel. 15, the indicated TCI state is applied to CORESET#0 for which the TCI state is indicated. The SSB and QCL selected at the time of the latest (recent) PRACH transmission are applied to CORESET#0 for which the TCI state is not indicated.

In the unified TCI state framework in and after Rel. 17, TCI states related to CORESET#0 have been studied.

For example, in unified TCI state frameworks in and after Rel. 17, for a (in Rel. 17) TCI state indication of CORESET#0, whether to apply the indication TCI state associated with the serving cell (indicated Rel-17 TCI state associated with the serving cell) is configured for each CORESET by RRC, otherwise existing MAC CE/RACH signaling mechanisms may be utilized.

In Rel. 17, the CSI-RS related to the TCI state applied to CORESET#0 may be QCLed with the SSB related to the serving cell PCI (physical cell ID) (same as in Rel. 15).

For CORESET#0, a CORESET with common search space (CSS), and a CORESET with CSS and a UE-specific search space (USS), for each CORESET, whether or not to follow the indication TCI state may be configured by the RRC parameter. In a case where it is not configured for the CORESET to follow the indication TCI state, the configuration TCI state may be applied to the CORESET.

For non-UE-dedicated channels/RSs (excluding CORESET), for each channel/resource/resource set, whether or not to follow the indication TCI state may be configured by the RRC parameter. If it is not configured for the channel/resource/resource set to follow the indication TCI state, the configuration TCI state may be applied to that channel/resource/resource set.

### [Antenna port QCL: Physical layer procedure for data/Physical downlink shared channel related procedure/UE procedure for receiving physical uplink shared channel]

The UE may be configured with a list of up to M TCI-States in the higher layer parameter PDSCH-Config for decoding of a PDSCH according to a detected PDCCH with the DCI for that UE and a provided serving cell. Here, M depends on the UE capability maxNumberConfiguredTCIstatesPerCC. Each TCI-State includes parameters for configuring a QCL relationship between one or two downlink reference signals and a DM-RS port of a PDSCH or a DM-RS port of a PDCCH or a CSI-RS port of a CSI-RS resource. The QCL relationship is configured by the higher layer parameter qcl-Type1 for the first DL RS and the higher layer parameter qcl-Type2 for the second DL RS (if configured). In the case of two DL RSs, the QCL types are not the same, regardless of whether the references are the same DL RS or different DL RSs. A QCL type corresponding to each DL RS is given by the higher layer parameter qcl-Type in QCL-Info, and may take one of the following values:
◇'typeA': {Doppler shift, Doppler spread, average delay, delay spread}
◇'typeB': {Doppler shift, Doppler spread}
◇'typeC': {Doppler shift, average delay}
◇'typeD': {spatial Rx parameter}

In PDSCH-Config (PDSCH configuration), the UE may be configured with a list of up to 128 DLorJointTCIState (DL or joint TCI state) configurations to provide reference signals for a DMRS of a PDSCH and a DMRS of a PDCCH in a given CC and CSI-RS, and in a case where UL TX (transmission) spatial filters are available for dynamic and configuration grant-based PUSCH and PUCCH resources in a given CC and SRS, to provide reference for determining that UL TCI filter.

In a case where there is no configuration of the TCI state (DL or joint TCI state (TCI-State) or UL TCI state (TCI-UL-State)) in the BWP in the CC, the UE can apply the configuration of the TCI-State or the TCI-UL-State from the reference BWP of the reference CC. In a case where the UE is configured with dl-OrJointTCI-StateList or TCI-UL-State in any CC in the same band, it is not expected that tci-StatesToAddModList (TCI state list for additional change), SpatialRelationInfo (spatial relationship information), and PUCCH-SpatialRelationInfo (PUCCH spatial relation information) excluding SpatialRelationInfoPos (spatial relation information for position) in the band are configured. The UE may assume that the UE is not configured with dl-OrJointTCI-StateList or a TCI-UL-State in any CC in the same band in the CC list in a case where the UE is configured with a TCI-State in any CC in the CC list by simultaneousTCI-UpdateList1-r16 (simultaneous TCI update list 1), simultaneousTCI-UpdateList2-r16 (simultaneous TCI update list 2), simultaneousSpatial-UpdatedList1-r16 (simultaneous spatial update list 1), or simultaneousSpatial-UpdatedList2-r16 (simultaneous spatial update list 2).

The UE receives an activation command which is used to map up to 8 TCI states and/or up to 8 TCI state pairs with one TCI state for DL channel/signal and/or one TCI state for UL channel/signal as described in the TCI state activation/deactivation MAC CE (TCI States Activation/Deactivation for UE-specific PDSCH MAC CE) or the unified TCI state activation/deactivation MAC CE (Unified TCI States Activation/Deactivation MAC CE) for UE-specific PDSCH in the MAC protocol specification, to a codepoint in a DCI field 'Transmission Configuration Indication' for one or a set of CCs/DL BWPs and, if applicable, one or a set of CCs/UL BWPs.

For a set of CCs/DL BWPs and, if applicable, for a set of CCs/UL BWPs, a set of TCI state IDs is activated, and if the applicable list of CCs is determined by the indicated CCs in the activation command, the same set of TCI state IDs is applied to all DL and/or UL BWPs in that indicated CC.

If the activation command maps a TCI state (at least one of a TCI-State and a TCI-UL-State) to only one codepoint, when the mapping indicated for that single TCI codepoint is applied as described in the requirements for Radio Resource Management (RRM) Support (MAC CE-based DL TCI state switching delay/MAC CE-based UL TCI state switching delay), the UE applies the indicated TCI state (at least one of a TCI-State and a TCI-UL-State) to one or a set of CCs/DL BWPs and, if applicable, one or a set of CCs/UL BWPs.

In a case where a bwp-id or cell for the QCL type A/D source RS in the QCL-Info in the TCI state is not configured, the UE assumes that the QCL type A/D source RS is configured in the CC/DL BWPs to which the TCI state is applied.

For a CORESET, in a case where it is configured that there is a TCI field in the DCI (tci-PresentInDCI set to 'enabled' or tci-PresentDCI-1-2 is configured), the UE configured with a list of TCI states (dl-OrJointTCI-StateList) of DL or joint with the activated TCI state (TCI-State or TCI-UL-State) receives DCI format 1_1/1_2 providing an indication TCI state (at least one of TCI-State and TCI-UL-State) for one CC or for all CCs in the same CC list configured by the simultaneous unified TCI update list (simultaneousU-TCI-UpdateList1-r17, simultaneousU-TCI-UpdateList2-r17, simultaneousU-TCI-UpdateList3-r17, simultaneousU-TCI-UpdateList4-r17). The DCI format 1_1/1_2 may or may not involve a DL assignment if the DL assignment is available.

If DCI format 1_1/1_2 does not involve DL assignment, the UE can assume (validate) the following.
◇The CS-RNTI is used for scrambling the CRC for the DCI.
◇Values of the following DCI fields (special fields) are set as follows:
   - ◇A redundancy version (RV) field is all '1's.
   - ◇A modulation and coding scheme (MCS) field is all '1's.
   - ◇A new data indicator (NDI) field is 0.
   - ◇A frequency domain resource assignment (FDRA) field is all '0's for FDRA type 0, all '1's for FDRA type 1, or all '0's for a dynamic switch (DynamicSwitch) (same as PDCCH validation of DL semi-persistent scheduling (SPS) or UL grant type 2 scheduling release).

If the UE receives a higher layer configuration of dl-OrJointTCI-StateList with a single TCI-State that can be used as the indication TCI state, the UE may make a QCL assumption from the configured TCI state for the DM-RS of the PDSCH, the DM-RS of the PDCCH, and the CSI-RS to which the indication TCI state is applied.

If the UE receives a higher layer configuration of dl-OrJointTCI-StateList with a single TCI-State or a single TCI-UL-State that can be used as the indication TCI state, the UE determines the UL TX spatial filter from the configured TCI state, if applicable, for the dynamic and configured grant-based PUSCH, PUCCH, and SRS to which the indication TCI state is applied.

In a case where the UE configured with a list of TCI states for DL or joint (dl-OrJointTCI-StateList) wishes to transmit a PUCCH with positive HARQ-ACK or a PUSCH with positive HARQ-ACK, corresponding to DCI carrying a TCI state indication and without DL assignment, or corresponding to a PDSCH scheduled by DCI carrying a TCI state indication, and in a case where the indication TCI state is different from the previously indicated indication TCI state, the indication TCI state (at least one of the indicated TCI-State and the indicated TCI-UL-State) starts to be applied from the first slot (beam application time 1) which is after at least beamAppTime symbols (beam application time (BAT)) from the last symbol of the PUCCH or PUSCH. Both the first slot and the beamAppTime symbols are determined on the active BWP with the smallest SCS in the BWPs from the CC applying the indication TCI state (at least one of the indicated TCI-State and the indicated TCI-UL-State) that is active at the end of the PUCCH or the PUSCH carrying the positive HARQ-ACK.

### [DCI format 1_1: Multiplex and channel encoding/downlink transport channel and control information/downlink control information/DCI format]

In Rel. 15/16, if the UE does not support active BWP change via DCI, the UE ignores the BWP indicator field. Similar behavior has been studied for the relationship between support of Rel. 17 TCI states and interpretation of TCI fields. It has been studied that if the UE is configured with Rel. 17 TCI state, the TCI field always exists in DCI format 1_1/1_2, and if the UE does not support TCI update via DCI, the UE ignores the TCI field.

In Rel. 15/16, whether or not the TCI field is present (TCI in DCI presence information, tci-PresentInDCI) is configured for each CORESET.

The TCI field in DCI format 1_1 is 0 bits if the higher layer parameter tci-PresentInDCI is not enabled, otherwise 3 bits. If the BWP indicator field indicates a BWP other than the active BWP, the UE follows the following operation.

[Operation] If the higher layer parameter tci-PresentInDCI is not enabled for a CORESET used for PDCCH conveying the DCI format 1_1, the UE assumes tci-PresentInDCI is not enabled for all CORESETs in the indicated BWPs; otherwise, the UE assumes tci-PresentInDCI is enabled for all CORESETs in the indicated BWPs.

The TCI field in DCI format 1_2 is 0 bits if the higher layer parameter tci-PresentInDCI-1-2 is not configured, otherwise 1 or 2 or 3 bits determined by the higher layer parameter tci-PresentInDCI-1-2. If the BWP indicator field indicates a BWP other than the active BWP, the UE follows the following operation.

[Operation] If the higher layer parameter tci-PresentInDCI-1-2 is not configured for the CORESET used for the PDCCH conveying the DCI format 1_2, the UE assumes that tci-PresentInDCI is not enabled for all CORESETs in the indicated BWPs; otherwise, the UE assumes that tci-PresentInDCI-1-2 is configured for all CORESETs in the indicated BWPs with the same value as tci-PresentInDCI-1-2 configured for the CORESET used for the PDCCH conveying the DCI format 1_2.

A TCI state ID indicating a joint DL/UL TCI state is associated with a value of a TCI field for joint DL/UL TCI state indication.

At least one TCI state ID of a TCI state ID indicating a TCI state of only DL and a TCI state ID indicating a TCI state of only UL are associated with a value of a TCI field for separate DL/UL TCI state indication. For example, the values 000 to 001 of the TCI field are associated with only one TCI state ID for DL, the values 010 to 011 of the TCI field are associated with only one TCI state ID for UL, and the values 100 to 111 of the TCI field are associated with both one TCI state ID for DL and one TCI state ID for UL.

### [Channel/RS to which Indication TCI State is Applied]

Indication TCI state ("indicated TCI state" by MAC CE/DCI may be applied to the following channels/RSs.

### [PDCCH]

· If followUnifiedTCIState (following a unified TCI state) is configured for CORESET0, the Indication TCI state applies. Otherwise, the Rel. 15 specification is applied to the CORESET. That is, CORESET0 follows the TCI state activated by the MAC CE or is QCLed with the SSB.
· The indication TCI state is always applied for a CORESET with USS/CSS type 3 other than index 0.
· The indication TCI state is applied if it is configured to follow the unified TCI state for a CORESET other than index 0 with at least a CSS other than CSS type 3. Otherwise, the configuration TCI state ("configured TCI state") for the CORESET is applied to the CORESET.

### [PDSCH]

· The Indication TCI state is always applied to all UE-dedicated PDSCHs.
· If the followUnifiedTCIState is configured for a non-UE-dedicated PDSCH (a PDSCH scheduled by the DCI in the CSS) (for the CORESET of the PDCCH scheduling the PDSCH), the indication TCI state may be applied. Otherwise, the configured TCI state for the PDSCH is applied to the PDSCH. In a case where the followUnifiedTCIState is not configured for the PDSCH, whether the non-UE-dedicated PDSCH follows the indication TCI state may be determined according to whether the followUnifiedTCIState is configured for the CORESET used for scheduling the PDSCH.

### [CSI-RS]

· The indication TCI state is applied in a case where followUnifiedTCIState is configured for the A-CSI-RS for CSI acquisition or beam management (for the CORESET of the PDCCH that triggers the A-CSI-RS). The configuration TCI state ("configured TCI state") for the CSI-RS is applied to other CSI-RSs.

### [PUCCH]

· An indication TCI state is always applied to all dedicated PUCCH resources.

### [PUSCH]

· An indication TCI state is always applied to a dynamic/configuration (configured) grant PUSCH.

### [SRS]

· The indication TCI state is applied in a case where it is configured to follow the unified TCI state for the SRS resource set for an A-SRS for beam management application and an A/SP/P-SRS for codebook (CB)/non-codebook (NCB)/antenna switching application. A configuration TCI state in the SRS resource set is applied to other SRSs.

In the present disclosure, the indication TCI state, the unified TCI state, the TCI state applied to the channel/signal that is configured to follow the unified TCI state, the TCI state applied to the UE-dedicated PDSCH and the CORESET/PDCCH associated with the USS, and the TCI state applied to the PUCCH and the PUSCH may be interchangeable with each other.

### (Multi-TRPs)

In NR, it has been studied that one or a plurality of transmission/reception points (TRPs) (multi-TRPs) perform DL transmission to UE by using one or a plurality of panels (multi-panels). Furthermore, it has been studied that the UE performs UL transmission to one or a plurality of TRPs.

Note that a plurality of TRPs may correspond to the same cell identifier (ID), may correspond to different cell IDs, may correspond to locations/orders of different TCI states, may correspond to different CORESET pools, or may correspond to different SRS resource sets. The cell ID may be a physical cell ID (for example, PCI) or a virtual cell ID.

In a case where only one TRP (TRP1) among the multi-TRPs performs transmission to the UE (which may be referred to as a single mode, a single TRP, or the like), the TRP1 transmits both a control signal (PDCCH) and a data signal (PDSCH) to the UE.

In the present disclosure, the single TRP mode may be a mode in a case where multi-TRPs (modes) are not configured.

In a case where only one TRP among the multi-TRPs transmits a control signal to the UE and the multi-TRP transmits a data signal (which may be referred to as a single master mode), the UE receives each PDSCH transmitted from the multi-TRPs on the basis of one piece of downlink control information (DCI).

In a case where each of the multi-TRPs transmits a separate control signal to the UE, and the multi-TRP transmits a data signal (which may be referred to as a multi-master mode), the first control signal (DCI) may be transmitted in the TRP1, and the second control signal (DCI) may be transmitted in the TRP2. The UE receives each PDSCH transmitted from the corresponding multi-TRPs on the basis of these DCIs.

In a case where a plurality of PDSCHs (which may be referred to as multiple PDSCHs (multi-PDSCHs)) from the multi-TRPs are scheduled by using one piece of DCI, the corresponding DCI may be referred to as single DCI (S-DCI or single PDCCH). In a case where each of a plurality of PDSCHs from the multi-TRPs is scheduled by using a plurality of DCI, the plurality of DCI may be referred to as multi-DCI (M-DCI or multiple PDCCHs (multi-PDCCHs)).

Different transport blocks (TB)/code words (CW)/different layers may be transmitted from each TRP of the multi-TRPs. Alternatively, the same TB/CW/layer may be transmitted from each TRP of the multi-TRPs.

As one form of multi-TRP transmission, non-coherent joint transmission (NCJT) has been studied. In the NCJT, for example, the TRP1 performs modulation mapping and layer mapping on a first codeword and transmits a first PDSCH by using first precoding in a first number of layers (for example, two layers). Furthermore, the TRP2 performs modulation mapping and layer mapping on a second codeword and transmits a second PDSCH by using second precoding in a second number of layers (for example, two layers).

Note that a plurality of PDSCHs (multi-PDSCHs) subjected to NCJT may be defined as partially or completely overlapping with respect to at least one of a time domain or a frequency domain. That is, the first PDSCH from a first TRP and the second PDSCH from a second TRP may overlap with respect to at least one of a time resource or a frequency resource.

The first PDSCH and the second PDSCH may be assumed not to be in a quasi-co-location (QCL) relationship (not to be quasi-co-located). Reception of the multiple PDSCHs is interchangeable with the simultaneous reception of PDSCHs that are not of a given QCL type (for example, QCL type D).

In URLLC for the multi-TRPs, support of PDSCH (transport block (TB) or codeword (CW)) repetition across the multi-TRPs has been studied. Support for repetition methods (URLLC schemes, for example, Schemes 1, 2a, 2b, 3, and 4) across the multi-TRPs on a frequency domain, a layer (spatial) domain, or a time domain has been studied. In Scheme 1, multiple PDSCHs from the multi-TRPs are subjected to space division multiplexing (SDM). In Schemes 2a and 2b, PDSCHs from the multi-TRPs are subjected to frequency division multiplexing (FDM). In Scheme 2a, the redundancy version (RV) is the same for the multi-TRPs. In Scheme 2b, the RVs may be the same or different for the multi-TRPs. In Schemes 3 and 4, the multiple PDSCHs from the multi-TRPs are subjected to time division multiplexing (TDM). In Scheme 3, the multiple PDSCHs from the multi-TRPs are transmitted in one slot. In Scheme 4, the multiple PDSCHs from the multi-TRPs are transmitted in different slots.

Such a multi-TRP scenario can perform more flexible transmission control using a high-quality channel.

The NCJT with multi-TRPs/panels may use a high rank. Both single DCI (single PDCCH) and multi-DCI (multi-PDCCHs) may be supported to support ideal and non-ideal backhaul among the plurality of TRPs. For both the single DCI and the multi-DCI, the maximum number of TRPs may be two.

Extension of TCI has been studied for single PDCCH designs (mainly for ideal backhaul). Each TCI codepoint in the DCI may correspond to one or two TCI states. A TCI field size may be the same as that in Rel. 15.

For PDCCH/CORESET defined in Rel. 15, one TCI state without a CORESET pool index (CORESETPoolIndex) (which may be referred to as TRP information (TRP Info)) is configured for one CORESET.

For enhancement of PDCCH/CORESET defined in Rel. 16, in the multi-DCI based multi-TRPs, a CORESET pool index is configured for each CORESET.

### (JT)

Joint transmission (JT) may mean simultaneous data transmission from multiple points (for example, TRP) to a single UE.

Rel. 17 supports non-coherent joint transmission (NCJT) from two TRPs. The PDSCH from the two TRPs may be independently precoded and independently decoded. The frequency resources may be non-overlapping (non-overlapping), partially overlapping (partial-overlapping), or fully overlapping (full-overlapping). If overlapping occurs, the PDSCH from one TRP will interfere with the PDSCH from the other TRPs.

In Rel. 18, it has been studied to support coherent joint transmission(CJT, mTRP CJT) using up to 4 TRPs. Data from the four TRPs may be coherently precoded and transmitted to the UE on the same time-frequency resources. For example, channels from four TRPs may be considered, and the same precoding matrix may be used. "Coherent" may mean that there is a given relationship between phases of a plurality of received signals. With 4TRP joint precoding, signal quality is improved, and there may be no interference between the four TRPs. The data may only experience interference outside of the four TRPs.

### (TCI Indication in Rel. 18 NR)

The configuration of the TCI state by RRC is as follows.
◇Up to 128 TCI states may be configured for one serving cell. In cooperation among a plurality of TRPs with a plurality of different PCIs, a plurality of TCI states may be associated with SSBs of the plurality of different PCIs, and up to eight PCIs may be configured.

Activation of the TCI state by the MAC CE is as follows.
◇In single TRP transmission, up to eight TCI states can be activated for one serving cell or for one BWP of one serving cell. In switching between a plurality of TRPs with a plurality of different PCIs, a plurality of activated TCI states may be associated with SSBs of the plurality of different PCIs, and TCI states of up to eight PCIs may be activated.
◇In multi-TRP joint transmission, up to eight TCI states may be activated per TRP/cell, and up to 16 TCI states may be activated in total. In joint transmission using a plurality of TRPs with a plurality of different PCIs, a plurality of activated TCI states may be associated with SSBs of a plurality of different PCIs, and TCI states of up to two PCIs may be activated.

Indication of the TCI state by the DCI follows.
◇A plurality of codepoints of the TCI indication field in the DCI are mapped to a plurality of TCI states activated via the MAC CE.
◇In the single TRP transmission, one codepoint of the TCI indication field in the DCI is mapped to one DL and UL joint TCI, or one DL TCI and one UL TCI, or one DL TCI, or one UL TCI.
◇In the single DCI based multi-TRP joint transmission, one codepoint of the TCI indication field in the DCI is mapped to one or two DL and UL joint TCIs, or one or two DL TCIs and one or two UL TCIs, or one or two DL TCIs, or one or two UL TCIs.
◇In the multi-DCI based multi-TRP joint transmission, one codepoint of the TCI indication field in the DCI is mapped to one or two DL and UL joint TCIs, or one or two DL TCIs and one or two UL TCIs, or one or two DL TCIs, or one or two UL TCIs. A plurality of DCI indicate TCI states for the plurality of TRPs.

### (Cell free)

Existing radio communication systems (for example, 5G NR) adopted a cellular method in which one cell is formed by one antenna/TRP in principle. The area formed by the cell is fixed/static.

In addition, in an existing radio communication system (for example, Rel. 16 or later), distributed Multi Input Multi Output (distributed MIMO, e.g., multi-TRP utilizing a plurality of transmission and reception points (TRPs)) in which a communication area is formed by coverage of a plurality of antennas/TRPs has been introduced. In distributed MIMO, simultaneous communication using a plurality of antennas/TRPs and communication using one antenna/TRP can be performed.

By adopting distributed MIMO, a more preferable line-of-sight environment can be prepared, and performance related to MIMO can be improved.

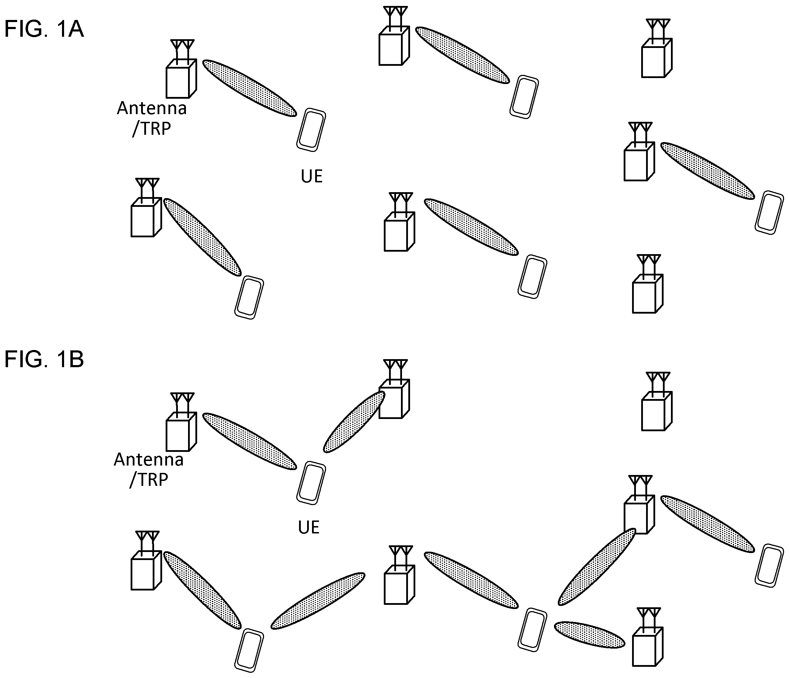

Figs. 1A and 1B are diagrams illustrating an outline of MIMO. Fig. 1A illustrates an example of co-located MIMO. In co-located MIMO, one UE communicates with one antenna/TRP.

On the other hand, Fig. 1B illustrates an example of distributed MIMO. In distributed MIMO, one UE communicates with a plurality of cooperated antennas/TRPs.

In a future radio communication system (for example, Rel. 20 or later), introduction of cell-free communication has been studied for the purpose of further improving performance and improving energy consumption efficiency through reduction of interference between a plurality of antennas/TRPs, improvement of a line-of-sight environment corresponding to utilization of a high frequency, improvement of frequency utilization efficiency of the entire system, and application of equal and high quality communication to each user.

Cell free may be referred to as cell free massive MIMO (mMIMO) or large-scale distributed MIMO(distributed MIMO, D-MIMO). Cell free uses coherent cooperation of a large number of access points. Cell free may include at least one of ultra-dense deployment, scalable cooperation, user-centric clustering, super-carrier aggregation, and analog fronthaul. The user plane for cell free may perform scheduling more flexibly than existing scheduling. The control plane for cell free may maintain some forms of cells to facilitate signaling.

In cell free, unlike a conventional cellular method, one area (which may be referred to as a cell/sub-cell or the like) may be formed by a plurality of antennas/TRPs. That is, the area may mean a cell that does not depend on a position of an antenna.

In cell free, the set of antennas/TRPs used for area formation may be changed according to the demand of the UE. For example, the set of antennas/TRPs may be changed on the basis of the number of UEs/the number of traffic/communication applications (for example, initial access/data communication/measurement/report) or the like instead of the coverage of the antennas/TRPs.

In other words, in cell free, the coverage between a plurality of antennas/TRPs may overlap.

In cell free, a direction in which a synchronization signal (which may be referred to as, for example, a synchronization signal block (SSB) or a synchronization signal/physical broadcast channel (SS/PBCH) block) is transmitted may be controlled in each antenna/TRP.

Further, in cell free, a central unit (CU)/distributed unit (DU) may be virtualized for each antenna/TRP. Alternatively, each antenna/TRP may be managed only by the CU.

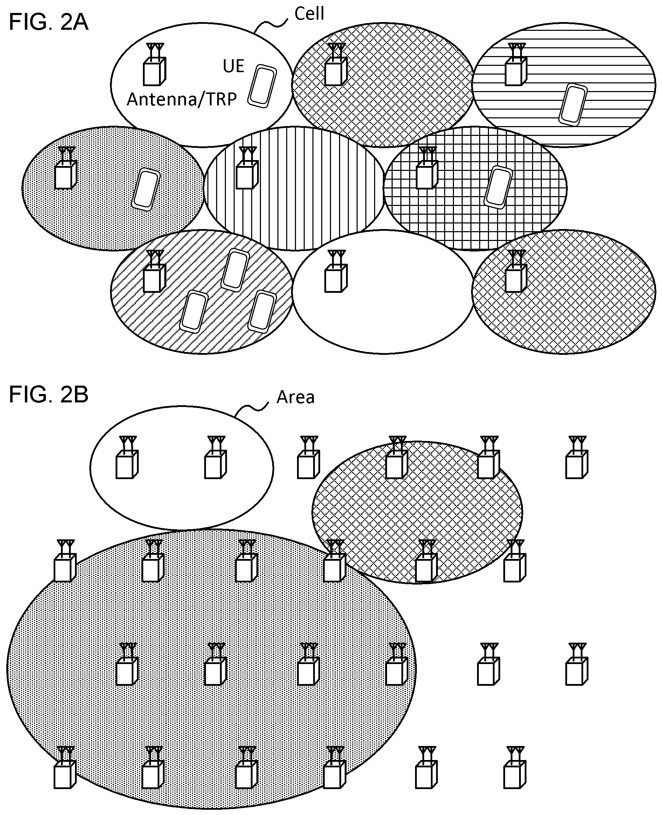

Fig. 2A is a diagram illustrating an outline of a cellular system. Fig. 2A illustrates a cell formed by each antenna/TRP, and the UE performs communication on the basis of the cell.

On the other hand, Fig. 2B is a diagram illustrating an outline of the cell-free system. In the example illustrated in Fig. 2B, the installed antenna/TRP does not form a fixed/static cell in a cellular system. As illustrated in Fig. 2B, in the cell-free system, one or more antennas/TRPs form an area according to a condition. Therefore, in the cell-free system, each antenna/TRP need not correspond to the same physical cell ID, and areas between a plurality of antennas/TRPs may overlap.

Cell free may be realized, for example, by adjusting a set of antennas/TRPs controlled by a central control unit (for example, CU).

In the cell-free system, a first cell (which may be referred to as, for example, a cell/super cell/macro cell/large cell) of which a physical range is fixed, such as a cell in a 5G NR system, and a second cell (which may be referred to as, for example, a sub-cell/area/microcell/cell/small cell/second cell in the first cell) of which a physical range semi-statically/dynamically varies on the basis of a condition may be formed. For example, to distinguish from the second cell, the first cell may be referred to as a super cell. In a case where the super cell includes a plurality of second cells, the second cell may have a definition/operation/coverage similar to an existing cell in NR. For example, to distinguish from the first cell, the second cell may be referred to as a sub-cell. In a case where the super cell or the cell includes a plurality of sub-cells, the sub-cell may have a definition/operation/coverage similar to an existing cell in NR.

The first cell may be a cell newly defined in a future radio communication system, or a definition of a cell in an existing radio communication system may be reused.

For the configuration of the first cell and the second cell, the following assumptions 1 and 2 are considered:
Assumption 1: The first cell includes a plurality of TRPs having one cell ID (physical cell ID (PCI)). The plurality of TRPs can perform transmission and reception in cooperation.
Assumption 2: The first cell includes a plurality of TRPs (or sub-cells) with different cell IDs. The plurality of TRPs/sub-cells can perform transmission and reception in cooperation.

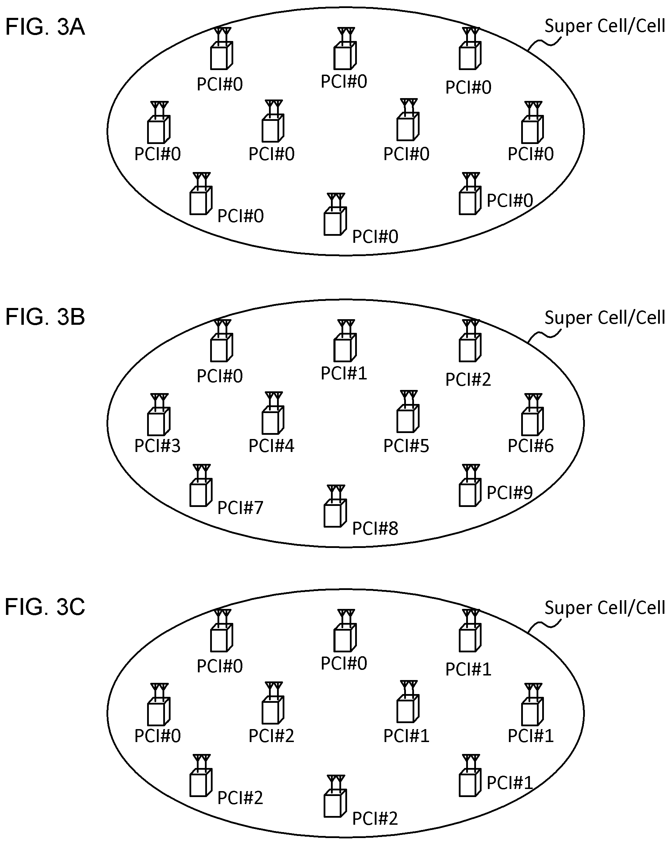

Fig. 3A is a diagram illustrating an example of an outline of Assumption 1 of the cell-free configuration. In the example illustrated in Fig. 3A, each TRP included in the first cell (super cell/cell) has the same PCI (PCI#0). A plurality of TRPs can perform communication in cooperation with one UE.

Fig. 3B is a diagram illustrating an example of an outline of Assumption 2 of the cell-free configuration. In the example illustrated in Fig. 3B, the respective TRPs included in the first cell (super cell/cell) have different PCIs (PCI#0 to PCI#9). A plurality of TRPs can perform communication in cooperation with one UE.

Fig. 3C is a diagram illustrating another example of an outline of Assumption 2 of the cell-free configuration. In the example illustrated in Fig. 3A, a PCI is allocated to each TRP included in the first cell (super cell/cell). In the example illustrated in FIG 3C, unlike the example in Fig. 3B, the same PCI may correspond to a plurality of TRPs. A plurality of TRPs can perform communication in cooperation with one UE. The plurality of TRPs associated with the same PCI may be included in one cell.

Transmission/reception with TRP/sub-cell cooperation may be based on at least one of the following several methods supported in NR:
◇Transmission of a single TRP/sub-cell with dynamic TRP/sub-cell switching (single TRP transmission)
◇Joint transmission (multi-TRP joint transmission) using a plurality of TRPs/sub-cells. The joint transmission may be based on single DCI or multi-DCI. The joint transmission may be non-coherent joint transmission (NCJT) or coherent joint transmission (CJT).

For cell free, assuming ideal backhaul and tight cooperation, in the joint transmission method, CJT may be prioritized over NCJT, and single DCI based joint transmission may be prioritized over multi-DCI based joint transmission.

### (Problem)

It is conceivable to consider the following several aspects in the extension for beam indication (TCI indication) in cell free.
◇Aspect 1: The number of TRPs/sub-cells in the super cell/cell is larger than that in NR.
◇Aspect 2: Dynamic clustering of TRPs/sub-cells for joint transmission/reception
◇Aspect 3: Transmission/reception cooperated by using more TRPs/sub-cells than in NR.

It is considered that the 128 TCI states configured by RRC are not sufficient to use a large number of TRPs/sub-cells in a super cell/cell.

In transmission of a single TRP/sub-cell with dynamic TRP/sub-cell switching, it is considered that the eight TCI states activated by the MAC CE are not sufficient to support a large number of cooperated TRPs/sub-cells (dynamic switching among a large number of TRPs/sub-cells).

In joint transmission of a plurality of TRPs/sub-cells, it is considered that the 16 TCI states activated by the MAC CE are not sufficient to support dynamic TRP/sub-cell clustering (dynamic selection of a plurality of TRPs/sub-cells for joint transmission).

In joint transmission of a plurality of TRPs/sub-cells, to support a large number of TRPs/sub-cells for joint transmission, it is considered that the 16 TCI states activated by the MAC CE are not sufficient, and the codepoints of the TCI field in the DCI mapped to the two TCI states are not sufficient.

As described above, the beam indication in the case of using a unit different from the existing cell has not been sufficiently studied. If the beam indication is not sufficiently studied, there is a possibility of causing a decrease in communication quality/throughput.

Therefore, the present inventors have conceived a beam indication method in a case where a unit different from an existing cell is used.

### (Various replacements, etc.)

Hereinafter, embodiments according to the present disclosure will be described in detail with reference to the drawings. It is noted that each of the following embodiments (for example, each case) may be used independently, or may be applied by combining at least two of the embodiments.

In the present disclosure, "A/B" and "at least one of A or B" may be interchangeable with each other. Furthermore, in the present disclosure, "A/B/C" may mean "at least one of A, B, and C".

In the present disclosure, activate, deactivate, instruct (or indicate), select, configure, update, determine, and the like may be interchangeable with each other. In the present disclosure, support, control, can control, operate, can operate, and the like may be interchangeable with each other.

In the present disclosure, radio resource control (RRC), an RRC parameter, an RRC message, a higher layer parameter, an information element (IE), a configuration, and the like may be interchangeable with each other. In the present disclosure, a Medium Access Control control element (MAC control element (CE)), an update command, an activation/deactivation command, and the like may be interchangeable with each other.

In the present disclosure, the higher layer signaling may be any of, for example, radio resource control (RRC) signaling, medium access control (MAC) signaling, and broadcast information, or a combination thereof. In the present disclosure, the RRC signaling, the RRC IE, the RRC parameter, and the higher layer parameter may be interchangeable with each other.

In the present disclosure, the MAC signaling may use, for example, the MAC control element (MAC CE), or a MAC protocol data unit (PDU). The broadcast information may be, for example, a master information block (MIB), a system information block (SIB), remaining minimum system information (RMSI), or other system information (OSI).

In the present disclosure, the physical layer signaling may be, for example, downlink control information (DCI) or uplink control information (UCI).

In the present disclosure, "having the capability of..." may be interchangeable with "supporting/reporting the capability of...".

In the present disclosure, ceil(x) and a ceiling function may be interchangeable with each other. In the present disclosure, floor(x) and a floor function may be interchangeable with each other. In the present disclosure, sqrt(x) and the square root (root) may be interchangeable with each other. In the present disclosure, x mod y, mod(x, y), a mod function, and a modulo operation may be interchangeable with each other. In the present disclosure, Σ_{i=M}^{M+N-1}f(i), Σ_{i=M}^{M+N-1}fi, i=f(i), a summation of f(i) or fᵢ over i=M, M+1,..., M+N-1, f(M)+f(M+1)+...+f(M+N-1), and fM+fM+1+...+fM+N-1 may be interchangeable with each other. In C(n,k), the number of combinations (combinatorial coefficients) for selecting k values from n values, binomial coefficients, ₙCₖ, and Cₙ^{k} may be interchangeable with each other.

In the present disclosure, a_{b}, a_b, and the notation in which b is attached to the lower right of a may be interchangeable with each other. In the present disclosure, a^{c}, a^c, and the notation in which c is attached to the upper right of a may be interchangeable with each other. In the present disclosure, a_{b}^{c}, a_b^c, and the notation in which b is attached to the lower right and c is attached to the upper right of a may be interchangeable with each other. In the present disclosure, x^{~} may be represented by adding ~ to x, or may be referred to as an x tilde. In the present disclosure, x⁻ may be represented by adding - above x, or may be referred to as an x bar.

In the present disclosure, the frequency range corresponding to FR1 may be 410 to 7125 MHz. In the present disclosure, FR2 may include FR2-1 and FR2-2, a frequency range corresponding to FR2-1 may be 24250 to 52600 MHz, and a frequency range corresponding to FR2-1 may be 52600 to 71000 MHz.

In the present disclosure, the TCI state, the DL and UL joint TCI state (a joint DL/UL TCI state, a TCI state applied to both a DL channel/signal and a UL channel/signal), a DL TCI state (a separate DL TCI state, a TCI state applied to a DL channel/signal only), and a UL TCI state (a separate UL TCI state, a TCI state applied only to a UL channel/signal) may be interchangeable with each other.

In the present disclosure, a joint transmission method of a plurality of TRPs/cells based on single DCI (single DCI based joint transmission, single DCI based multi-TRP transmission) may be at least one of the following methods.
◇Space division multiplex (SDM) method This method may be a method in which different ports/layers of the DMRS for DL/UL transmission are respectively associated with different TCI states.
◇Frequency division multiplex (FDM) method This method may be a method in which different frequency domain resources of the DL/UL transmission are respectively associated with different TCI states.
◇Coherent joint transmission (CJT) method This method may be a method in which different ports/layers of the DMRS for DL/UL transmission are respectively associated with different TCI states.
◇Single frequency network (SFN) method This method may be a method in which different ports/layers of the DMRS for DL/UL transmission are respectively associated with different TCI states.
◇Time division multiplex (TDM) method This method may be a method in which different time domain resources of the DL/UL transmission are respectively associated with different TCI states.

In the present disclosure, a joint transmission method of a plurality of TRPs/cells based on multi-DCI (multi-DCI based joint transmission, multi-dci based multi-TRP transmission) may be a method in which a plurality of channels/signals of DL/UL are associated with different TCI states transmitted on a plurality of resources of overlapping time/frequency domain.

In the present disclosure, the TCI state, the beam, the spatial relation, the parameter of Tx/Rx in the spatial domain, the QCL, and the reference signal may be interchangeable with each other.

In the present disclosure, the TRP, the group of beams, the group of TCI states, and the set/group of RS resources may be interchangeable with each other.

In the present disclosure, the DCI indicating the TCI state may schedule the PDSCH/PUSCH.

In the present disclosure, the cooperated transmission may be DL transmission or UL transmission using one indicated TCI state among a plurality of activated TCI. In the present disclosure, the joint transmission may be a DL transmission or a UL transmission using a plurality of indicated TCI states/TRPs/sub-cells. In the present disclosure, single TRP transmission/cooperated transmission/joint transmission may be applied to DL/UL.

The following embodiments may be applied to other scenarios that use a plurality of TRPs more than a plurality of TRPs in existing specifications.

### (Radio Communication Method)

### <Embodiment 1>

This embodiment relates to an RRC configuration (RRC IE, list) of a TCI state.

For one super cell/cell, up to N_{Tci} TCI states may be configured by RRC. NT_{ci} may be the maximum number of TCI states in the RRC configuration.

N_{Tci} may be greater than 128. NT_{ci} may follow at least one of the following several equations.
◇ ${N}_{Tci} = {M}_{Tci - perTrp} * {N}_{Trp}$
◇ ${N}_{Tci} = {M}_{Tci - perCell} * {N}_{Cell}$

At least one of N_{Tci}, N_{Trp}, N_{Cell}, M_{Tci-perCell}, and M_{Tci-perTrp} may be defined in a specification, provided by RRC, or reported as UE capability.

N_{Trp} may indicate the number of TRPs with one PCI or different PCIs in a super cell/cell. NCₑₗₗ may indicate the number of sub-cells with different PCIs in a super cell/cell. MT_{ci-perTrp} may indicate the number (maximum number) of TCI states per TRP for a super cell/cell. M_{Tci-perCell} may indicate the number (maximum number) of TCI states per sub-cell of the super cell/cell.

### <<Application to Assumption 2>>

At least one of the following several features may be applied to the above Assumption 2.
◇The plurality of TCI states configured in the RRC configuration may be associated with SSBs/CSI-RSs of a plurality of different PCIs.
◇Up to N_{Cell} of different PCIs may be provided. Compared with the existing NR, N_{Cell} may be greater than 8.
◇In a case where N PCIs are provided, the N PCIs may include one serving cell PCI and N-1 additional PCIs different from the serving cell PCI.

### <<RRC Signaling Structure>>

The RRC signaling structure may follow at least one of the following several options.

### ◇Option 1

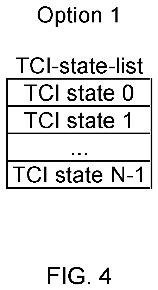

A single list of N TCI states is provided for one super cell/cell. All TCI states in the single list may correspond to different TRPs/sub-cells and may be indexed from 0 to N-1. In the example in Fig. 4, one TCI state list is configured for one super cell/cell. The TCI state list includes N TCI states. The N TCI states have indices (TCI state IDs) of 0 to N-1, respectively.

### ◇Option 2

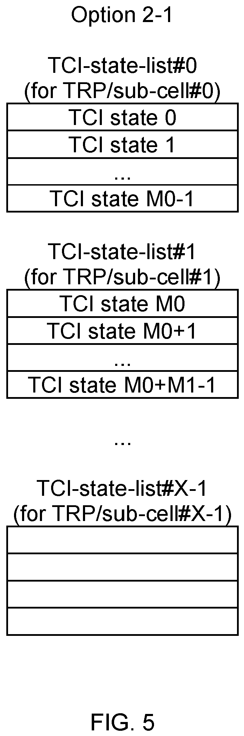

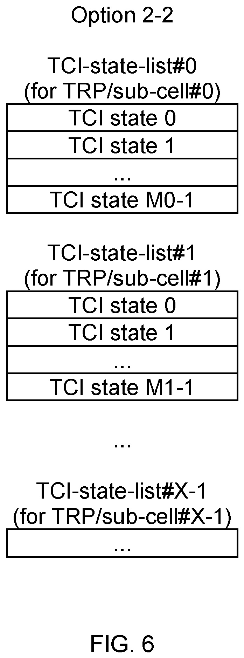

A single list of a plurality of TCI states is provided for each TRP of one super cell/cell. This option may follow at least one of the following several Options 2-x.
- ◇Option 2-1: All TCI states across all lists for all TRPs/sub-cells of a super cell/cell may be indexed from 0 to N-1 (N TCI states). In the example in Fig. 5, X TCI state lists #0, #1,..., and #X-1 respectively corresponding to X TRPs/sub-cells #0, #1,..., and #X-1 (IDs of TRPs/sub-cells = 0, 1,..., and X-1) are configured for one super cell/cell. The TCI state list #i includes Mᵢ TCI states. The total number N of TCI states across the TCI state lists #0, #1,..., and #X-1 (TCI State List IDs = 0, 1,..., and X-1) is Σᵢ₌₀^{X-1}Mᵢ. Indexes (TCI state IDs) Σₖ₌₀ⁱ⁻¹Mₖ, (Σₖ₌₀ⁱ⁻¹Mₖ)+1,..., and (Σₖ₌₀ⁱ⁻¹Mₖ)+Mᵢ-1 are respectively assigned to Mᵢ TCI states in the TCI state list #i. The N TCI states in the X TCI state lists are respectively indexed with indices 0, 1,..., and N-1.
- ◇Option 2-2: All TCI states in one list for one TRP/sub-cell of a super cell/cell may be indexed from 0 to M-1 (M TCI states). In the example in Fig. 6, X TCI state lists #0, #1,..., and #X-1 (IDs of TRPs/sub-cells = 0, 1,..., and X-1) respectively corresponding to X TRPs/sub-cells #0, #1,..., and #X-1(TCI State List IDs = 0, 1,..., and X-1) are configured for one super cell/cell. The TCI state list #i includes Mᵢ TCI states. The Mᵢ TCI states in the TCI state list #i are indexed with indices (TCI state IDs) 0, 1,..., and Mᵢ-1, respectively.

### <<Other Application Examples>>

This embodiment may also be applied when the total number of TCI states configured for one super cell/cell is 128 or less (when the maximum value N_{Tci} of the total number of TCI states configured for one super cell/cell is 128 or less).

### <<Relationship between TRP/sub-cell and TCI state>>

The TCI states of the same TRP/sub-cell may have a common point.

The UL transmission may follow at least one of the following several Associations 1-x.
◇Association 1-1: UL transmission using the TCI state of the same one TRP/sub-cell may be associated with the same one timing advance(TA, timing advance group, TAG). UL transmissions using TCI states of a plurality of different TRPs/sub-cells may be associated with a plurality of different TAs (TAG).
◇Association 1-2: UL transmissions using the TCI states of the same one TRP/sub-cell may be associated with the same one power control parameter set. UL transmissions using TCI states of a plurality of different TRPs/sub-cells may be associated with a plurality of different power control parameter sets. One power control parameter set may include at least one of P0, alpha, and path loss.
◇Association 1-3: UL transmissions using the TCI state of the same one TRP/sub-cell may be associated with the same one SRS resource set for codebook/non-codebook. UL transmissions using TCI states of a plurality of different TRPs/sub-cells may be associated with a plurality of different SRS resource sets for codebook/non-codebook.
◇Association 1-4: UL transmissions using the TCI state of the same one TRP/sub-cell may be associated with the same one scrambling ID. UL transmissions using TCI states of a plurality of different TRPs/sub-cells may be associated with a plurality of different scrambling IDs.

The DL transmission may follow at least one of the following several Associations 2-x.
◇Association 2-1: DL transmission using the TCI state of the same one TRP/sub-cell may be associated with the same one power control parameter set. DL transmission using TCI states of a plurality of different TRPs/sub-cells may be associated with a plurality of different power control parameter sets. One power control parameter set may include at least one of an SSB transmission power, a transmission power offset of a CSI-RS with respect to the SSB, and a CSI-RS transmission power.
◇Association 2-2: DL transmission using the TCI state of the same one TRP/sub-cell may be quasi co-located (QCLed) for some properties or may be quasi co-located for some QCL types. Some properties may include at least one of a Doppler shift, an average delay, a Doppler spread, and a delay spread. Some QCL types may include at least one of 'typeA', 'typeB', 'typeC', and 'typeD'.
◇Association 2-3: DL transmission using the TCI state of the same one TRP/sub-cell may be associated with the same one scrambling ID. DL transmission using TCI states of a plurality of different TRPs/sub-cells may be associated with a plurality of different scrambling IDs.

According to this embodiment, even if the association between the cell and the TRP is changed, the UE can be properly configured/indicated for the TCI state.

### <Embodiment 2>

This embodiment relates to DL/UL transmission of a single TRP/sub-cell (single TRP transmission).

### <<Number of Active TCI States>>

Up to X_{Tci} TCI states may be activated by a MAC CE command (activation MAC CE, activation command) for one super cell/cell or for one BWP of one super cell/cell. XT_{ci} may be the maximum number of TCI states in the MAC CE command.

X_{Tci} may be greater than 8. XT_{ci} may follow at least one of the following Expressions.
◇ ${X}_{Tci} = {Y}_{Tci - perTrp} * {N}_{Trp}$
◇ ${X}_{Tci} = {Y}_{Tci - perCell} * {N}_{Cell}$

At least one of X_{Tci}, N_{Trp}, N_{Cell}, Y_{Tci-perCell}, and Y_{Tci-perTrp} may be defined in a specification, provided by RRC, or reported as UE capability.

N_{Trp} may indicate the number of TRPs with the same PCI or a plurality of different PCIs in a super cell/cell for cooperated transmission. The cooperated transmission may be dynamic switching between the plurality of TRPs. N_{Cell} may indicate the number of a plurality of sub-cells with a plurality of different PCIs in a super cell/cell for cooperated transmission. The cooperated transmission may be dynamic switching between the plurality of TRPs. Y_{Tci-perTrp} may indicate the number (maximum number) of TCI states per TRP of a super cell/cell. YT_{ci-perCell} may indicate the number (maximum number) of TCI states per sub-cell of a super cell/cell.

### <<Application to Assumption 2>>

At least one of the following several features may be applied to the above Assumption 2.
◇The plurality of TCI states activated by the MAC CE may be associated with SSBs/CSI-RSs of a plurality of different PCIs. A plurality of TCI states for up to a plurality of N_{Cell} different PCIs may be activated. Compared with the existing NR, N_{Cell} may be greater than 8.
◇In a case where a plurality of TCI states of N PCIs are activated, the N PCIs may include one serving cell PCI and N-1 additional PCIs different from the serving cell PCI, or may be N additional PCIs different from the serving cell PCI.

### <<Other Application Examples>>

This embodiment may also be applied when the total number of TCI states that are activated for one super cell/cell is 8 (equal to the maximum number in the existing NR) or less (When the maximum value X_{Tci} of the TCI states activated for one super cell/cell is 8 or less).

### <<Activation of TCI State>>

The MAC CE signaling structure, and the mapping between the TCI state activated by the MAC CE and the codepoint of the TCI field in the DCI may follow at least one of the following several options.

### ◇Option 1

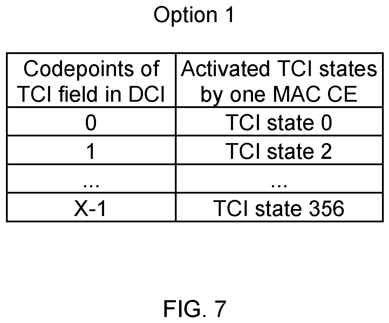

One MAC CE command activates a plurality of TCI states across all TRPs/sub-cells of one super cell/cell. A plurality of codepoints of the TCI field in the DCI may be respectively mapped to the plurality of TCI states activated across all TRPs/sub-cells of one super cell/cell. An increase in the number of activated TCI states may cause signaling overhead. This option may have at least one of the following several features:
- ◇In the example in Fig. 7, one MAC CE activates a plurality of TCI states across all TRPs/sub-cells of one super cell/cell. The plurality of activated TCI states (TCI state IDs) 0, 2, 8,... are respectively mapped to the plurality of codepoints 0, 1, 2,... of the TCI field in the DCI.

### ◇Option 2

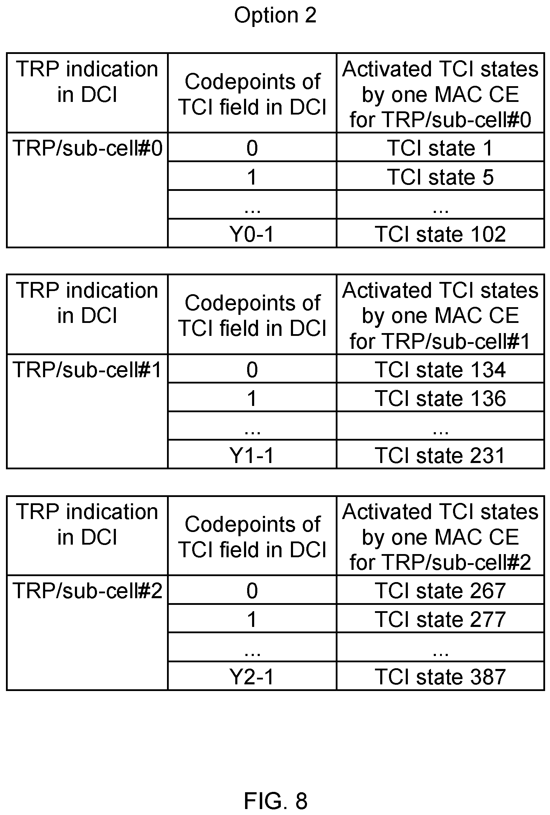

One MAC CE command activates a plurality of TCI states for one TRP/sub-cell of one super cell/cell. The plurality of codepoints of the TCI field in the DCI may be respectively mapped to the plurality of TCI states activated for one TRP/sub-cell of one super cell/cell. This option may have at least one of the following several features:
- ◇The MAC CE may include an index corresponding to the TRP/sub-cell.
- ◇The DCI may indicate an index corresponding to the TRP/sub-cell. This option may be represented by the following examples.
- ◇In the example in Fig. 8, a plurality of TCI states for TRP/sub-cell #0 of one super cell/cell are activated by the first MAC CE. The plurality of TCI states (TCI state IDs) 1, 5,..., and 102 are respectively mapped to a plurality of codepoints 0, 1,... of the TCI field in the DCI for TRP/sub-cell #0. A plurality of TCI states for the TRP/sub-cell #1 of the super cell/cell are activated by the second MAC CE. The plurality of TCI states 134, 136,..., and 231 are respectively mapped to a plurality of codepoints 0, 1,... of the TCI field in the DCI for the TRP/sub-cell #1. The plurality of TCI states for the TRP/sub-cell #2 of the super cell/cell are activated by the third MAC CE. The plurality of TCI states 267, 277,..., and 387 are respectively mapped to a plurality of codepoints 0, 1,... of the TCI field in the DCI for the TRP/sub-cell #2.

### ◇Option 3

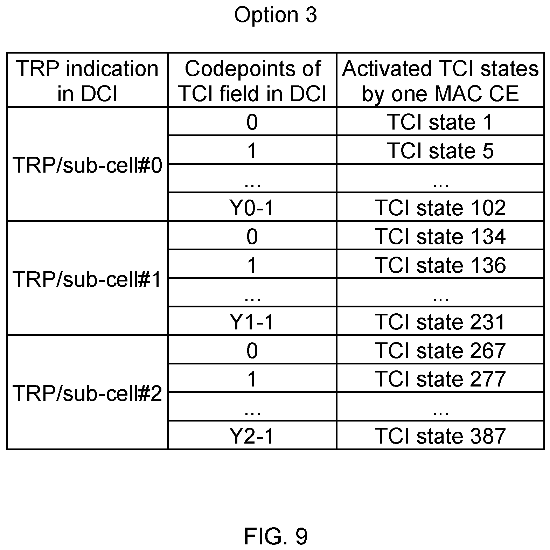

One MAC CE command activates a plurality of TCI states for all TRPs/sub-cells of one super cell/cell. The plurality of codepoints of the TCI field in the DCI may be respectively mapped to the plurality of TCI states activated for one TRP/sub-cell of one super cell/cell. This option may have at least one of the following several features:
- ◇The first Y0 TCI states (first TCI state group #0) in the plurality of TCI states to be activated may correspond to the first TRP/sub-cell #0 in all TRPs/sub-cells of one super cell/cell. The next Y1 TCI states in the plurality of TCI states to be activated (second TCI state group #1) may correspond to the second TRP/sub-cell #1 in all TRPs/sub-cells of the super cell/cell.
- ◇The DCI may indicate an index corresponding to the TRP/sub-cell. This option may be represented by the following examples.
- ◇In the example in Fig. 9, one MAC CE activates a plurality of TCI states across all TRPs/sub-cells of one super cell/cell. The first Y0 TCI states in the plurality of activated TCI states (TCI state IDs) 1, 5,..., and 102 are respectively mapped to a plurality of codepoints 0, 1,... of the TCI field in the DCI for the TRP/sub-cell #0. The next Y1 TCI states 134, 136,..., and 231 in the plurality of activated TCI states are respectively mapped to a plurality of codepoints 0, 1,... of the TCI field in the DCI for the TRP/sub-cell #1. The next Y2 TCI states 267, 277,..., and 387 in the plurality of activated TCI states are respectively mapped to a plurality of codepoints 0, 1,... of the TCI field in the DCI for the TRP/sub-cell #2.

### ◇Option 4

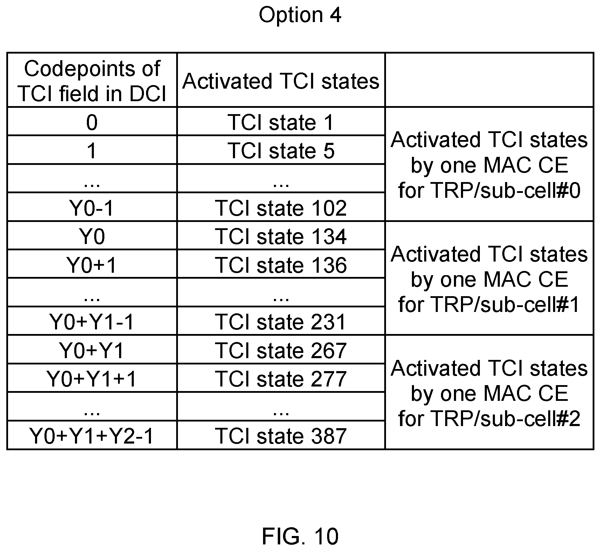

One MAC CE command activates a plurality of TCI states for one TRP/sub-cell of one super cell/cell. The plurality of codepoints of the TCI field in the DCI may be respectively mapped to a plurality of TCI states activated across all TRPs/sub-cells of one super cell/cell. This option may have at least one of the following several features:
- ◇The MAC CE may include an index corresponding to one TRP/sub-cell.
- ◇The first Y0 codepoints (the first codepoint group #0) in the plurality of codepoints of the TCI field in the DCI may correspond to the first TRP/sub-cell #0 in all TRPs/sub-cells of one super cell/cell. The next Y1 codepoints (second codepoint group #1) in the plurality of codepoints of the TCI field in the DCI may correspond to the second TRP/sub-cell #1 in all TRPs/sub-cells of the super cell/cell. This option may be represented by the following examples.
- ◇In the example in Fig. 10, Y0 TCI states for the TRP/sub-cell #0 of one super cell/cell are activated by the first MAC CE. The Y0 TCI states (TCI state IDs) 1, 5,..., and 102 are respectively mapped to the first Y0 codepoints 0, 1,..., and Y0-1 of the plurality of codepoints of the TCI field in the DCI. The second MAC CE activates Y1 TCI states for the TRP/sub-cell #1 of the super cell/cell. The Y1 TCI states 134, 136,..., and 231 are respectively mapped to the next Y1 codepoints Y0, Y0+1,..., and Y0+Y1-1 of the plurality of codepoints of the TCI field in the DCI. The Y2 TCI states for the TRP/sub-cell #2 of the super cell/cell are activated by the third MAC CE. The Y2 TCI states 267, 277,..., and 387 are respectively mapped to the next Y2 codepoints Y0+Y1, Y0+Y1+1,..., and Y0+Y1+Y2-1 of the plurality of codepoints of the TCI field in the DCI.

According to this embodiment, even if the association between the cell and the TRP is changed, the UE may be properly configured/indicated for the TCI state for transmission of a single TRP/sub-cell (single TRP transmission).

### <Embodiment 3>

This embodiment relates to DL/UL joint transmission of a plurality of TRPs/sub-cells based on single DCI (single DCI based multi-TRP joint transmission).

### <<Number of Active TCI States>>

Up to X_{Tci} TCI states may be activated by a MAC CE command (activation MAC CE, activation command) for one super cell/cell or for one BWP of one super cell/cell. XT_{ci} may be the maximum number of TCI states in the MAC CE command.

X_{Tci} may be greater than 16. XT_{ci} may follow at least one of the following Expressions.
◇ ${X}_{Tci} = {Y}_{Tci - perTrp} * {N}_{Trp}$
◇ ${X}_{Tci} = {Y}_{Tci - perCell} * {N}_{Cell}$
◇ ${X}_{Tci} = {Y}_{Tci - perTciGroup} * {N}_{TciGroup}$
◇ ${X}_{Tci} = {N}_{Tci - perTciGroup} * {N}_{TciGroup - PerTrpGroup} * {N}_{TrpGroup}$
◇ ${X}_{Tci} = {Y}_{Tci - perTciGroup} * {N}_{TciGroup - perCellGroup} * {N}_{CellGroup}$

At least one of X_{Tci}, N_{Trp}, N_{Cell}, Y_{Tci-perCell}, Y_{Tci-perTrp}, Y_{Tci-perTciGroup}, N_{TciGroup}, N_{TciGroup-PerTrpGroup}, N_{TrpGroup}, N_{TciGroup-PerCellGroup}, and N_{CellGroup} may be defined in a specification, provided by RRC, or reported as UE capability.

N_{Trp} may indicate the number of TRPs with the same PCI or a plurality of different PCIs in a super cell/cell for joint transmission. Compared with NR, N_{Trp} may be greater than 2. N_{Cell} may indicate the number of a plurality of sub-cells with a plurality of different PCIs in a super cell/cell for joint transmission. Y_{Tci-perTrp} may indicate the number (maximum number) of TCI states per TRP of a super cell/cell. YT_{ci-perCell} may indicate the number (maximum number) of TCI states per sub-cell of a super cell/cell.

One group of Y_{Tci-perTciGroup} TCI states may be applied to joint transmission. The MAC CE may activate up to N_{TciGroup} groups in the TCI state. Compared with NR, Y_{Tci-perTciGroup} may be greater than 2 and N_{TciGroup} may be greater than 8.

One group of Y_{Tci-perTciGroup} TCI states may be applied to joint transmission. A group of TRPs/sub-cells may be used for joint transmission. The MAC CE may activate TCI states for up to N_{TrpGroup} groups of TRPs. NT_{ciGroup-PerTrpGroup} groups of the TCI states may be activated for each group of TRPs. The MAC CE may activate TCI states for up to N_{CellGroup} groups of sub-cells. N_{TciGroup-PerCellGroup} groups of the TCI states may be activated for each group of sub-cells. For example, four TRP groups are {TRP#1, TRP#2}, {TRP#1, TRP#3}, {TRP#2, TRP#4}, and {TRP#3, TRP#4}, and eight TCI state groups are activated for each TRP group, each TCI state group includes two TCI states, and 64 TCI states are activated in total.

### <<Application to Assumption 2>>

At least one of the following several features may be applied to the above Assumption 2.
◇Single DCI based multi-TRP joint transmission using a plurality of different PCIs is not supported in NR. In this embodiment, single DCI based multi-TRP joint transmission using a plurality of different PCIs is supported.
◇The plurality of TCI states activated by the MAC CE may be associated with SSBs/CSI-RSs of a plurality of different PCIs. One group of TCI states applied to joint transmission may be associated with SSB/CSI-RS of a plurality of different PCIs.
◇A plurality of TCI states for up to N_{Cell} different PCIs may be activated.
◇In a case where a plurality of TCI states of the N PCIs are activated, the N PCIs may include one serving cell PCI and N-1 additional PCIs different from the serving cell PCI, or may be N additional PCIs different from the serving cell PCI.
◇Variation: A plurality of TRPs may be associated with one PCI. The plurality of TCI states activated by the MAC CE may be associated with SSBs/CSI-RSs of a plurality of different PCIs. One group of TCI states applied to joint transmission may be associated with SSB/CSI-RS of the same one PCI.

### <<Other Application Examples>>

This embodiment may also be applied when the total number of TCI states activated for one super cell/cell is 16 or less (when the maximum value X_{Tci} of the TCI state activated for one super cell/cell is 16 or less).

### <<Activation of TCI State>>

The MAC CE signaling structure, and the mapping between the TCI state activated by the MAC CE and the codepoint of the TCI field in the DCI may follow at least one of the following several options.

### ◇Option 1

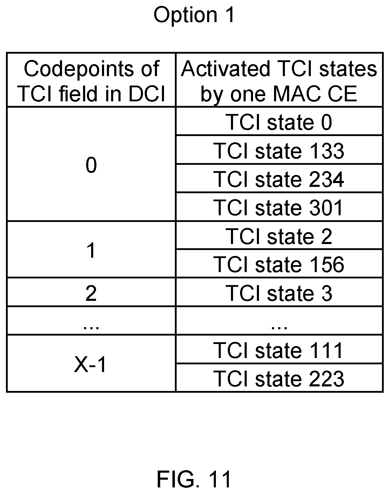

One MAC CE command activates a plurality of TCI states across all TRPs/sub-cells of one super cell/cell. One field (for example, the TCI field) in the DCI may be used for the TCI indication. The codepoint i of the TCI field in the DCI may be mapped to the Yi TCI states activated by the MAC CE. This option may have at least one of the following several features:
- ◇In a case where the codepoint i is indicated, the corresponding Yi TCI states may be used for joint transmission. When Yi=1, transmission of a single TRP/sub-cell using one indicated TCI state may be performed.
- ◇The Yi TCI states may correspond to Yi TRPs/sub-cells of one super cell/cell.
- ◇Yi may be 1, 2,..., or Ymax.
- ◇Ymax may be a maximum number of TCI states/TRPs/sub-cells used for joint transmission.
- ◇A plurality of different codepoints may be mapped to different numbers of TCI states.
- ◇The MAC CE may indicate the number of TCI states to which the codepoints are mapped. For example, the MAC CE may indicate Yi.
- ◇In the example in Fig. 11, the UE receives one MAC CE activating a plurality of TCI states across all TRPs/sub-cells of one super cell/cell and receives DCI including one TCI field. The plurality of activated TCI states are divided into groups of Y0, Y1,... TCI states. The codepoint 0 of the TCI field indicates the first Y0 TCI states (TCI state IDs) 0, 133,..., and 301 in the plurality of activated TCI states. The codepoint 1 of the TCI field indicates the next Y1 TCI states 2 and 156 in the plurality of activated TCI states.

### ◇Option 2

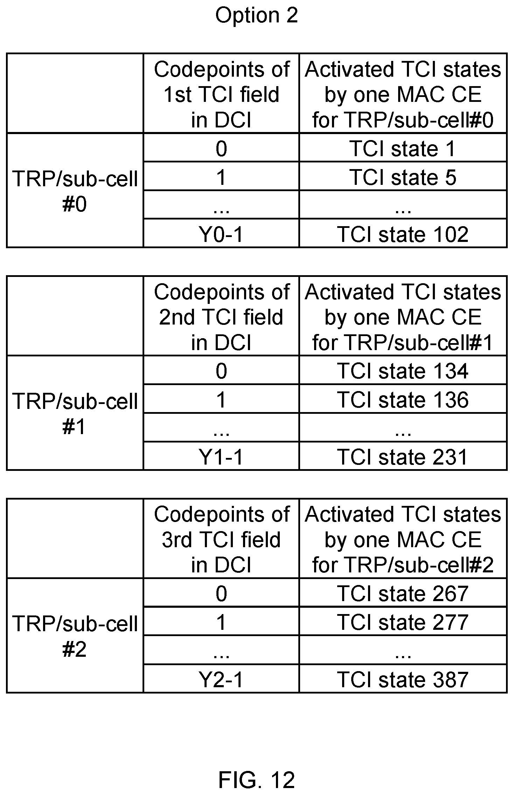

One MAC CE command activates a plurality of TCI states for one TRP/sub-cell of one super cell/cell. Ymax fields (for example, the TCI fields) in the DCI may be used for the TCI indication. One codepoint of one field in the DCI may be mapped to one TCI state activated by the MAC CE. This option may have at least one of the following several features:
- ◇Y fields from the Ymax fields may indicate an enabled TCI state, and other fields may indicate codepoints indicating that the fields are not used. For example, Y may be 1, 2,..., and Ymax.
- ◇Ymax may be a maximum number of TCI states/TRPs/sub-cells used for joint transmission.
- ◇Y TCI states indicated by the Y fields may be used for joint transmission. When Y=1, transmission of a single TRP/sub-cell using one TCI state indicated by the one field may be performed.
- ◇For example, up to four TRPs/sub-cells may be used for joint transmission. There are four fields in the DCI. One or two or three or four fields may indicate the enabled TCI state. One or two or three or four TCI states/TRPs/sub-cells may be used for joint transmission.
- ◇Variation: Zmax fields in the DCI may be used for the TCI indication. Zmax may indicate the number of candidate TRPs/sub-cells. The TRPs/sub-cells for joint transmission may be selected from among candidate TRPs/sub-cells. The Y fields from the Zmax fields may indicate an enabled TCI state, and other fields may indicate codepoints indicating that the fields are not used. For example, Y may be 1, 2,..., and Ymax. The Y TCI states indicated by the Y fields may be used for joint transmission. Ymax may be a maximum number of TCI states/TRPs/sub-cells used for joint transmission. Zmax ≥ Ymax may be satisfied. For example, in a case where there are six candidate TRPs/sub-cells and there are five fields in the DCI, up to four fields indicate an enabled TCI state, and up to four TRPs/sub-cells are used for joint transmission.
- ◇In the example in Fig. 12, the UE receives Y MAC CEs #0, #1, and #2 respectively corresponding to Y=3 TRPs/sub-cells #0, #1, and #2 of one super cell/cell (IDs of TRPs/sub-cells = 0, 1, and 2), and receives DCI including Y TCI fields. The MAC CE #0 (first MAC CE) activates the Y0 TCI states for the TRP/sub-cell #0 (first TRP/sub-cell). The Y0 TCI states (TCI state IDs) 1, 5,..., and 102 are respectively mapped to a plurality of codepoints 0, 1,..., and Y0-1 of the TCI field #0 (first TCI field) in the DCI. The MAC CE #1 (second MAC CE) activates the Y1 TCI states for the TRP/sub-cell #1 (second TRP/Sub-cell). The Y1 TCI states 134, 136,..., and 231 are respectively mapped to a plurality of codepoints 0, 1,..., and Y1-1 of the TCI field #1 (second TCI field) in the DCI. The MAC CE #2 (third MAC CE) activates the Y2 TCI states for the TRP/sub-cell #2 (third TRP/sub-cell). The Y2 TCI states 267, 277,..., and 387 are respectively mapped to a plurality of codepoints 0, 1,..., and Y2-1 of the TCI field #2 (third TCI field) in the DCI.

### ◇Option 3

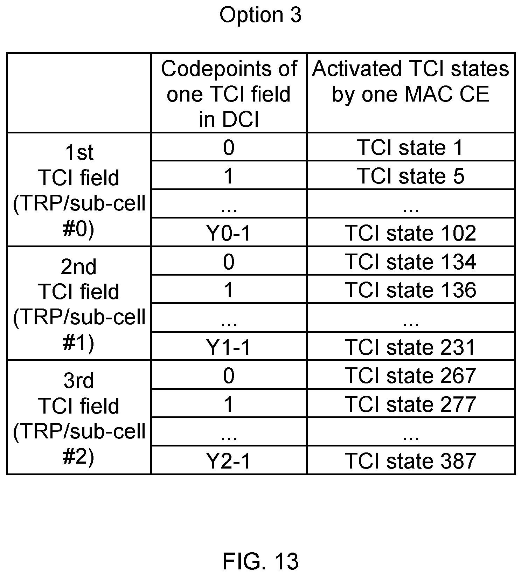

One MAC CE command activates a plurality of TCI states across all TRPs/sub-cells of one super cell/cell. One field (for example, the TCI field) in the DCI may correspond to one TRP/sub-cell of one super cell/cell. One codepoint in the DCI may be mapped to one TCI state activated by the MAC CE. This option may have at least one of the following several features:
- ◇The first Y0 TCI states (the first TCI state group #0) in the plurality of TCI states activated by the MAC CE may correspond to the first (#0) TRP/sub-cell/field, and the next Y1 TCI states (the second TCI state group #1) may correspond to the second (#1) TRP/sub-cell/field.
- ◇Y fields from the Ymax fields may indicate an enabled TCI state, and other fields may indicate codepoints indicating that the fields are not used. For example, Y may be 1, 2,..., and Ymax.
- ◇Ymax may be a maximum number of TCI states/TRPs/sub-cells used for joint transmission.
- ◇Y TCI states indicated by the Y fields may be used for joint transmission. When Y=1, transmission of a single TRP/sub-cell using one TCI state indicated by the one field may be performed.
- ◇Variation: Zmax fields in the DCI may be used for the TCI indication. Zmax may indicate the number of candidate TRPs/sub-cells. The TRPs/sub-cells for joint transmission may be selected from among candidate TRPs/sub-cells. Y fields from the Zmax fields may indicate an enabled TCI state, and other fields may indicate a codepoint indicating that the fields are not used. For example, Y may be 1, 2,..., and Ymax. The Y TCI states indicated by the Y fields may be used for joint transmission. Ymax may be a maximum number of TCI states/TRPs/sub-cells used for joint transmission. Zmax ≥ Ymax may be satisfied, and, for example, there are six candidate TRPs/sub-cells. There are five fields in the DCI. Up to four fields indicate enabled TCI states, and up to four TRPs/sub-cells are used for joint transmission.
- ◇In the example in Fig. 13, the UE receives one MAC CE activating a plurality of TCI states across Y=3 TRPs/sub-cells #0, #1, and #2 of one super cell/cell (IDs of TRPs/sub-cells =0, 1, and 2) and receives DCI including Y TCI fields. The first Y0 TCI states (first TCI state group #0) in the plurality of activated TCI states correspond to TRP/sub-cell #0 (first TRP/sub-cell). The Y0 TCI states (TCI state IDs) 1, 5,..., and 102 are respectively mapped to a plurality of codepoints 0, 1,..., and Y0-1 of the TCI field #0 (first TCI field) in the DCI. The next Y1 TCI states in the plurality of activated TCI states (second TCI state group #1) correspond to TRP/sub-cell #1 (second TRP/sub-cell). The Y1 TCI states 134, 136,..., and 231 are respectively mapped to a plurality of codepoints 0, 1,..., and Y1-1 of the TCI field #1 (second TCI field) in the DCI. The next Y2 TCI states in the plurality of activated TCI states (third TCI state group #2) correspond to TRP/sub-cell #2 (third TRP/sub-cell). The Y2 TCI states 267, 277,..., and 387 are respectively mapped to a plurality of codepoints 0, 1,..., and Y2-1 of the TCI field #2 (third TCI field) in the DCI.

### ◇Option 4

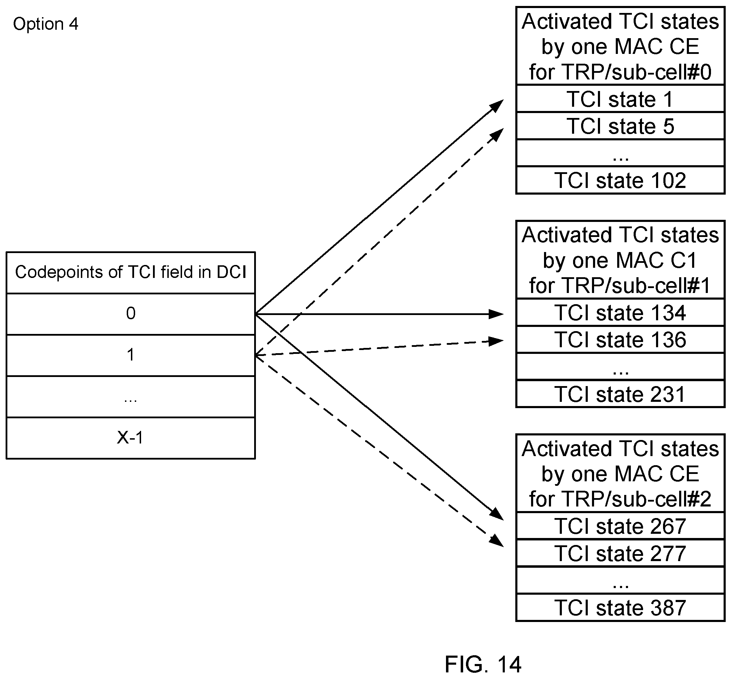

One MAC CE command activates a plurality of TCI states for one TRP/sub-cell of one super cell/cell. One field (for example, the TCI field) in the DCI may be used for the TCI indication. The codepoint i of the TCI field in the DCI may be mapped to the Yi TCI states activated by the MAC CE. This option may have at least one of the following several features:
- ◇In a case where the codepoint i is indicated, the corresponding Yi TCI states may be used for joint transmission. When Yi=1, transmission of a single TRP/sub-cell using one indicated TCI state may be performed.
- ◇The Yi TCI states may correspond to Yi TRPs/sub-cells of one super cell/cell.
- ◇Yi may be 1, 2,..., or Ymax.
- ◇Ymax may be a maximum number of TCI states/TRPs/sub-cells used for joint transmission.
- ◇A plurality of different codepoints may be mapped to different numbers of TCI states.
- ◇In the example in Fig. 14, the UE receives Y MAC CEs #0, #1, and #2 respectively corresponding to Y=3 TRPs/sub-cells #0, #1, and #2 of one super cell/cell (IDs of TRPs/sub-cells =0, 1, and 2), and receives DCI including one TCI field. Y TCI states for the TRP/sub-cell #0 (first TRP/sub-cell) are activated by the MAC CE #0 (first MAC CE). The Y0 TCI states (TCI state IDs) 1, 5,..., and 102 are respectively mapped to a plurality of codepoints 0, 1,..., and Y0-1 of the TCI field in the DCI. The MAC CE #1 (second MAC CE) activates the Y1 TCI states for the TRP/sub-cell #1 (second TRP/Sub-cell). The Y1 TCI states 134, 136,..., and 231 are respectively mapped to a plurality of codepoints 0, 1,..., and Y1-1 of the TCI field in the DCI. The MAC CE #2 (third MAC CE) activates the Y2 TCI states for the TRP/sub-cell #2 (third TRP/sub-cell). The Y2 TCI states 267, 277,..., and 387 are respectively mapped to a plurality of codepoints 0, 1,..., and Y2-1 of the TCI field in the DCI.

According to this embodiment, even if the association between the cell and the TRP is changed, the UE may be properly configured/indicated for TCI state for joint transmission of a plurality of TRPs/sub-cells based on single DCI (single DCI based multi-TRP joint transmission).

### <Embodiment 4>

This embodiment relates to another form for DL/UL joint transmission of a plurality of TRPs/sub-cells based on single DCI (single DCI based multi-TRP joint transmission).

The TCI indication method may be similar to the Rel. 18 unified TCI framework in NR.

### <<Number of Active TCI States>>

The UE may always maintain Zmax TCI states. Zmax may be the number of candidate TRPs/sub-cells. The plurality of TRPs/sub-cells for joint transmission may be selected from among a plurality of candidate TRPs/sub-cells. For each of DL transmission and UL transmission, it may be indicated to use Y TCI states/TRPs/sub-cells from Zmax TCI states/TRPs/sub-cells for joint transmission. When Y=1, transmission of a single TRP/sub-cell (single TRP transmission) may be performed. This TCI state may have at least one of the following several features.
◇Y may be 1, 2,..., and Ymax. Ymax may be a maximum number of TCI states/TRPs/sub-cells used for joint transmission.
◇Compared with NR, Zmax may be greater than 2 and Ymax may be greater than 2.
◇For example, in a case where there are six candidate TRPs/sub-cells and up to four TRPs/sub-cells are used for joint transmission, the UE always maintains six TCI states and is indicated to use up to four TCI states from the six TCI states for joint transmission in each of DL transmission and UL transmission.

The MAC CE activation of the TCI state may have at least one of the following several features.
◇Up to X_{Tci} TCI states may be activated by a MAC CE command (activation MAC CE, activation command) for one super cell/cell or for one BWP of one super cell/cell. XT_{ci} may be the maximum number of TCI states in the MAC CE command.
◇X_{Tci} may be greater than 16. XT_{ci} may follow at least one of the following Expressions.
   - ◇ ${X}_{Tci} = {Y}_{Tci - perTrp} * {N}_{Trp}$
   - ◇ ${X}_{Tci} = {Y}_{Tci - perCell} * {N}_{Cell}$
◇At least one of X_{Tci}, N_{Trp}, N_{Cell}, Y_{Tci-perCell}, and Y_{Tci-perTrp} may be defined in a specification, provided by RRC, or reported as UE capability.
◇N_{Trp} may indicate the number of TRPs with the same PCI or a plurality of different PCIs in a super cell/cell for joint transmission.
◇N_{Cell} may indicate the number of a plurality of sub-cells with a plurality of different PCIs in a super cell/cell for joint transmission.
◇Y_{Tci-perTrp} may indicate the number (maximum number) of TCI states per TRP for a super cell/cell.
◇Y_{Tci-perCell} may indicate the number (maximum number) of TCI states per sub-cell of the super cell/cell.

### <<Application to Assumption 2>>

At least one of the following several features may be applied to the above Assumption 2.
◇The plurality of TCI states activated by the MAC CE may be associated with SSBs/CSI-RSs of a plurality of different PCIs.
◇A plurality of TCI states for up to N_{Cell} different PCIs may be activated.
◇In a case where a plurality of TCI states of the N PCIs are activated, the N PCIs may include one serving cell PCI and N-1 additional PCIs different from the serving cell PCI, or may be N additional PCIs different from the serving cell PCI.

### <<Other Application Examples>>

This embodiment may also be applied when the total number of TCI states activated for one super cell/cell is 16 or less (when the maximum value X_{Tci} of the TCI state activated for one super cell/cell is 16 or less).

### <<Activation/Update of TCI State>>

The MAC CE signaling structure, and the mapping between the TCI state activated by the MAC CE and the codepoint of the TCI field in the DCI may follow at least one of the following several options. The structure of the signal is similar to that of Embodiment 3, but the interpretation of the signal is different from that of Embodiment 3.

### ◇Option 1

One MAC CE command activates a plurality of TCI states across all TRPs/sub-cells of one super cell/cell. One field (for example, the TCI field) in the DCI may be used for the TCI indication. A codepoint i of the TCI field in the DCI may be mapped to Zi TCI states activated by the MAC CE. This option may have at least one of the following several features:
- ◇In a case where the codepoint i is indicated, Zi TCI states from Zmax TCI states may be updated. Other TCI states may be maintained unchanged.
- ◇The Zi TCI states may correspond to Zi TRPs/sub-cells of one super cell/cell.
- ◇Zi may be 1, 2,..., and Zmax.
- ◇A plurality of different codepoints may be mapped to different numbers of TCI states.
- ◇The MAC CE may indicate the number of TCI states to which the codepoints are mapped. For example, the MAC CE may indicate Zi.

### ◇Option 2

One MAC CE command activates a plurality of TCI states for one TRP/sub-cell of one super cell/cell. Zmax fields (for example, the TCI field) in the DCI may be used for the TCI indication. One field may correspond to one candidate TRP/sub-cell. One codepoint of one field may be mapped to one TCI state activated by the MAC CE. This option may have at least one of the following several features:
- ◇Z fields from the Zmax fields may indicate an enabled TCI state, and other fields may indicate codepoints indicating that the fields are not used. Z may be 1, 2,..., and Zmax.
- ◇Z TCI states indicated by the Z fields may be updated. Other TCI states may be maintained unchanged.

### ◇Option 3

One MAC CE command activates a plurality of TCI states across all TRPs/sub-cells of one super cell/cell. Zmax fields (for example, the TCI field) in the DCI may be used for the TCI indication. One field may correspond to one TRP/sub-cell of one super cell/cell. One codepoint of one field may be mapped to one TCI state activated by the MAC CE. This option may have at least one of the following several features:
- ◇The first Y0 TCI states (the first TCI state group #0) in the plurality of TCI states activated by the MAC CE may correspond to the first (#0) TRP/sub-cell/field, and the next Y1 TCI states (the second TCI state group #1) may correspond to the second (#1) TRP/sub-cell/field.
- ◇Z fields from the Zmax fields may indicate an enabled TCI state, and other fields may indicate codepoints indicating that the fields are not used. Z may be 1, 2,..., and Zmax.
- ◇Z TCI states indicated by the Z fields may be updated. Other TCI states may be maintained unchanged.

### ◇Option 4

One MAC CE command activates a plurality of TCI states for one TRP/sub-cell of one super cell/cell. One field (for example, the TCI field) in the DCI may be used for the TCI indication. A codepoint i of the TCI field in the DCI may be mapped to Zi TCI states activated by the MAC CE. This option may have at least one of the following several features:
- ◇In a case where the codepoint i is indicated, Zi TCI states from Zmax TCI states may be updated. Other TCI states may be maintained unchanged.
- ◇The Zi TCI states may correspond to Zi TRPs/sub-cells of one super cell/cell.
- ◇Zi may be 1, 2,..., and Zmax.
- ◇A plurality of different codepoints may be mapped to different numbers of TCI states.

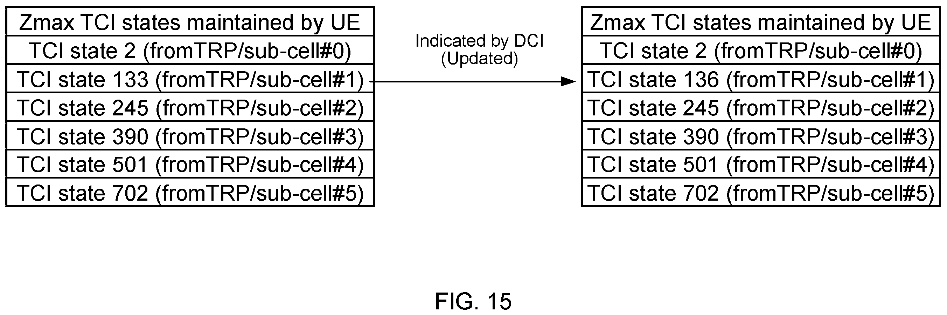

In the example in Fig. 15, the UE maintains Zmax=6 active TCI states. Thereafter, the UE receives the DCI including the Zmax TCI fields. The second TCI field in the Zmax TCI fields indicates an enabled TCI state. The UE updates the TCI state of the second TRP/sub-cell #1 (ID of TRP/sub-cell =1) to the indicated enabled TCI state.

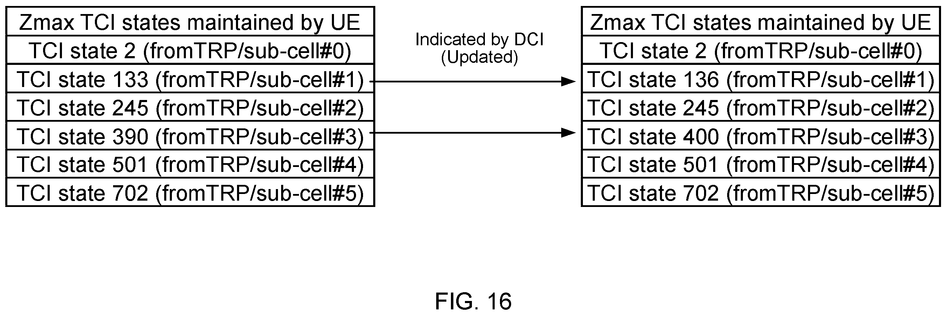

In the example in Fig. 16, the UE maintains Zmax=6 active TCI states. Thereafter, the UE receives the DCI including the Zmax TCI fields. The second and fourth TCI fields in the Zmax TCI fields indicate enabled TCI states. The UE updates the TCI state of the second TRP/sub-cell # (ID of TRP/sub-cell =1) 1 and the TCI state of the fourth TRP/sub-cell #3 to the indicated two enabled TCI states, respectively.

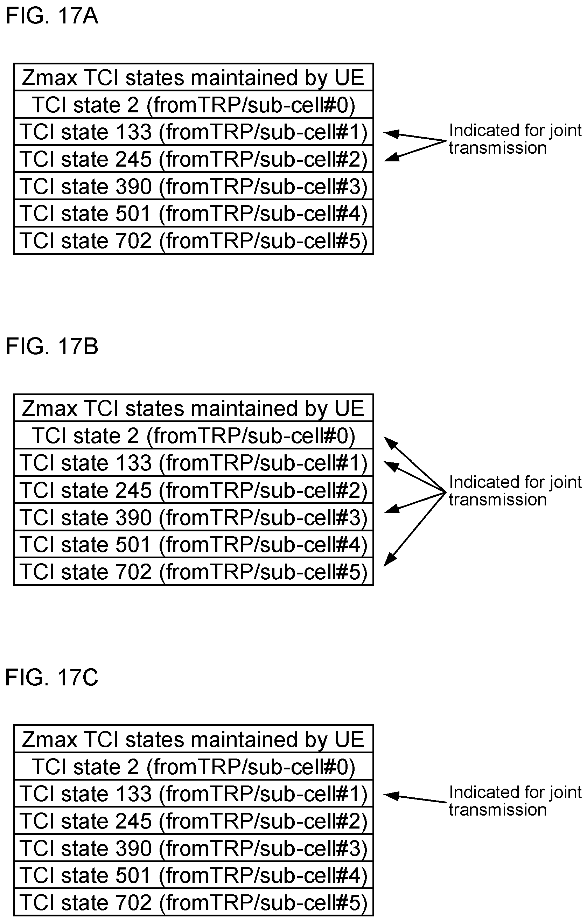

In the example in Fig. 17A, the UE maintains Zmax=6 active TCI states. Thereafter, the UE receives an indication (for example, DCI) of using Y=2 TRP/sub-cell/TCI states in the Zmax candidate TRP/sub-cell/TCI states for transmission. The UE uses the indicated second and third TRP/sub-cell/TCI states #1 and #2 (IDs of TRPs/sub-cells =1 and 2) for joint transmission.

In the example in Fig. 17B, the UE maintains Zmax=6 active TCI states. Thereafter, the UE receives an indication (for example, DCI) of using Y=4 TRP/sub-cell/TCI states in the Zmax candidate TRP/sub-cell/TCI states for transmission. The UE uses the indicated first, second, fourth, and sixth TRP/sub-cell/TCI states #0, #1, #4, and #6 (IDs of TRPs/sub-cells =0, 1, 4, and 6) for joint transmission.

In the example in Fig. 17C, the UE maintains Zmax=6 active TCI states. Thereafter, the UE receives an indication (for example, DCI) of using Y=1 TRP/sub-cell/TCI state in the Zmax candidate TRP/sub-cell/TCI states for transmission. The UE uses the indicated second TRP/sub-cell/TCI state #1 (ID of TRP/sub-cell =1) for transmission of a single TRP/sub-cell.

According to this embodiment, even if the association between the cell and the TRP is changed, the UE may be properly configured/indicated with the TCI state for a single or plurality of TRPs/sub-cells.

### <Embodiment 5>

This embodiment relates to DL/UL joint transmission of a plurality of TRPs/sub-cells based on multi-DCI (multi-DCI based multi-TRP joint transmission).

Similar to NR, a CORESET group/pool (CORESET group, CORESET pool, CORESETPoolIndex) may be defined. The MAC CE command may activate the TCI state for each CORESET group. The plurality of codepoints of the TCI field in the DCI may be respectively mapped to a plurality of TCI states for a corresponding CORESET group.

In the present disclosure, the CORESET group may be a set of resources for DCI monitoring, for example, a group of search spaces/search space sets.

### <<Relationship between CORESET group and TRP/sub-cell>>

A relationship between a CORESET group and a TRP/sub-cell may follow at least one of the following several options.

### ◇Option 1

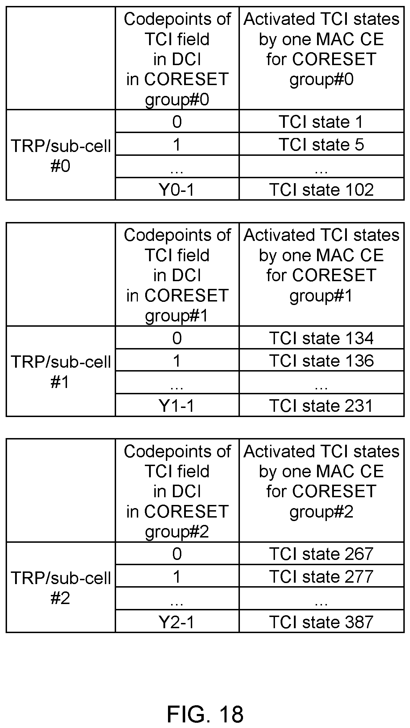

One CORESET group is mapped to one TRP/sub-cell of one super cell/cell. The UE may receive a plurality of DCI (multi-DCI) in a plurality of CORESET groups (CORESETs in a plurality of CORESET groups). Joint transmission of a plurality of TRPs/sub-cells based on multi-DCI (multi-DCI based multi-TRP joint transmission) may be performed. This option may have at least one of the following several features:
- ◇Compared with NR, more than two CORESET groups may be configured by RRC.
- ◇Up to X_{Tci} TCI states may be activated by a MAC CE command (activation MAC CE, activation command) for one CORESET group, or for one super cell/cell, or for one BWP of one super cell/cell.
- ◇One field (for example, the TCI field) in the DCI may be used for the TCI indication. One codepoint of the TCI field may be mapped to one TCI state.
- ◇Up to X_{Tci}*N_{CORESET-Group} TCI states may be activated, up to X_{Tci}*N_{Trp} TCI states, or up to X_{Tci}*N_{Cell} TCI states may be activated for one super cell/cell or for one BWP of one super cell/cell in total. Each parameter may follow at least one of the following several features.
   --◇N_{Trp} may indicate the number of TRPs with the same PCI or a plurality of different PCIs in a super cell/cell for cooperated/joint transmission. Compared with NR, N_{Trp} may be greater than 2.
   --◇N_{Cell} may indicate the number of a plurality of sub-cells with a plurality of different PCIs in a super cell/cell for cooperated/joint transmission.
   --◇N_{CORESET-Group} may indicate the number of CORESET groups for cooperated/joint transmission. Compared with NR, N_{CORESET-Group} may be greater than 2.
   --◇At least one of X_{Tci}, N_{Trp}, N_{Cell}, and N_{CORESET-Group} may be defined in a specification, provided by RRC, or reported as UE capability.
- ◇At least one of the following features may be applied to the above Assumption 2.
   --◇A plurality of TCI states activated by the MAC CE for one CORESET group may be associated with SSB/CSI-RS for the same one PCI.
   --◇A plurality of TCI states associated with up to N_{Cell} PCIs may be activated for one super cell/cell. Compared with NR, N_{Cell} may be greater than 2.
   --◇In a case where a plurality of TCI states of the N PCIs are activated, the N PCIs may include one serving cell PCI and N-1 additional PCIs different from the serving cell PCI, or may be N additional PCIs different from the serving cell PCI.
- ◇In the example in Fig. 18, the UE receives Y MAC CEs #0, #1, and #2 respectively corresponding to Y=3 CORESET groups/TRPs/sub-cells #0, #1, and #2 (IDs of CORESET groups/TRPs/sub-cells =0, 1, and 2) of one super cell/cell, and receives DCI in a CORESET in each CORESET group. Each piece of DCI has one TCI field. Y0 TCI states for the CORESET group/TRP/sub-cell #0 (first CORESET group/TRP/sub-cell) are activated by the MAC CE #0 (first MAC CE). The Y0 TCI states (TCI state IDs) 1, 5,..., and 102 are respectively mapped to a plurality of codepoints 0, 1,..., and Y0-1 of the TCI field in the DCI in the CORESET group #0. Y1 TCI states for the CORESET group/TRP/sub-cell #1 (second CORESET group/TRP/sub-cell) are activated by the MAC CE #1 (second MAC CE). The Y1 TCI states 134, 136,..., and 231 are respectively mapped to a plurality of codepoints 0, 1,..., and Y1-1 of the TCI field in the DCI in the CORESET group #1. Y2 TCI states for the CORESET group/TRP/sub-cell #2 (third CORESET group/TRP/sub-cell) are activated by the MAC CE #2 (third MAC CE). The Y2 TCI states 267, 277,..., and 387 are respectively mapped to a plurality of codepoints 0, 1,..., and Y2-1 of the TCI field in the DCI in the CORESET group #2.

### ◇Option 2

One CORESET group is mapped to a plurality of TRPs/sub-cells of one super cell/cell. Transmission of a single TRP/sub-cell with dynamic TRP/sub-cell switching based on DCI in one CORESET group may be performed. This option may have at least one of the following several features:
- ◇Compared with NR, more than two CORESET groups may be configured by RRC.
- ◇Up to X_{Tci} TCI states may be activated by the MAC CE for one CORESET group in one super cell/cell or in one BWP of one super cell/cell. XT_{ci} may follow at least one of the following Expressions.
   --◇ ${X}_{Tci} = {Y}_{Tci - perTrp} * {N}_{Trp}$
   --◇ ${X}_{Tci} = {Y}_{Tci - perCell} * {N}_{Cell}$

Each parameter may follow at least one of the following several features.
--◇N_{Trp} may indicate the number of TRPs with the same PCI or a plurality of different PCIs associated with the same CORESET group of super cells/cells for cooperated transmission. The cooperated transmission may use one TRP based on dynamic switching between N_{Trp} TRPs.
--◇N_{Cell} may indicate the number of a plurality of sub-cells with a plurality of different PCIs associated with the same CORESET group of super cells/cells for cooperated transmission. The cooperated transmission may use one TRP based on dynamic switching between the N_{Cell} sub-cells.
--◇Y_{Tci-perTrp} may indicate the number (maximum number) of TCI states per TRP for a super cell/cell. YT_{ci-perCell} may indicate the number (maximum number) of TCI states per sub-cell of a super cell/cell.
--◇Up to X_{Tci*}N_{CORESET-Group} TCI states may be activated for one super cell/cell or for one BWP of one super cell/cell in total. NC_{ORESET-Group} may indicate the number of CORESET groups in one super cell/cell or in one BWP of one super cell/cell.
--◇At least one of X_{Tci}, N_{Trp}, N_{Cell}, Y_{Tci-perTrp}, Y_{Tci-perCell}, and N_{CORESET-Group} may be defined in a specification, provided by RRC, or reported as UE capability.
   - ◇At least one of the following features may be applied to the above Assumption 2.
--◇A plurality of TCI states activated by the MAC CE for one CORESET group may be associated with SSBs/CSI-RSs of a plurality of different PCIs.
--◇A plurality of TCI states associated with up to N_{Cell} different PCIs may be activated for one CORESET group.
--◇A plurality of TCI states associated with up to N different PCIs may be activated for one super cell/cell. N may be N_{Cell} or N_{Cell*NCORESET-Group}.
--◇In a case where a plurality of TCI states of the N PCIs are activated, the N PCIs may include one serving cell PCI and N-1 additional PCIs different from the serving cell PCI, or may be N additional PCIs different from the serving cell PCI.

### ◇Option 3

One CORESET group is mapped to a plurality of TRPs/sub-cells of one super cell/cell. Joint transmission of a plurality of TRPs/sub-cells based on single DCI in one CORESET group (single DCI based multi-TRP joint transmission) may be performed. This option may have at least one of the following several features:
- ◇Compared with NR, more than two CORESET groups may be configured by RRC.
- ◇Up to X_{Tci} TCI states may be activated by the MAC CE for one CORESET group in one super cell/cell or in one BWP of one super cell/cell. XT_{ci} may follow at least one of the following Expressions.
   --◇ ${X}_{Tci} = {Y}_{Tci - perTrp} * {N}_{Trp}$
   --◇ ${X}_{Tci} = {Y}_{Tci - perCell} * {N}_{Cell}$
   --◇ ${X}_{Tci} = {Y}_{Tci - perTciGroup} * {N}_{TciGroup}$
   --◇ ${X}_{Tci} = {Y}_{Tci - perTciGroup} * {N}_{TciGroup - perTrpGroup} * {N}_{TrpGroup}$
   --◇ ${X}_{Tci} = {Y}_{Tci - perTciGroup} * {N}_{TciGroup - perCellGroup} * {N}_{CellGroup}$

Each parameter may follow at least one of the following several features.
--◇N_{Trp} may indicate the number of a plurality of TRPs with the same PCI or a plurality of different PCIs associated with the same CORESET group of super cells/cells for joint transmission.
--◇N_{Cell} may indicate the number of a plurality of sub-cells with a plurality of different PCIs associated with the same CORESET group of super cells/cells for joint transmission.
--◇Y_{Tci-perTrp} may indicate the number (maximum number) of TCI states per TRP for a super cell/cell. YT_{ci-perCell} may indicate the number (maximum number) of TCI states per sub-cell of a super cell/cell.
--◇For joint transmission, one group of Y_{Tci-perTciGroup} TCI states may be applied. The MAC CE may activate the N_{TciGroup} groups of the TCI state. Compared with NR, Y_{Tci-perTciGroup} may be greater than 2.
--◇For joint transmission, one group of Y_{Tci-perTciGroup} TCI states may be applied. One group of TRPs/sub-cells may be used for joint transmission. The MAC CE may activate TCI states for N_{TrpGroup} groups of TRPs. NT_{ciGroup-perTrpGroup} groups of TCI states may be activated for each group of TRPs. The MAC CE may activate TCI states for N_{CellGroup} groups of sub-cells. NT_{ciGroup-perCellGroup} groups of TCI states may be activated for each group of sub-cells.
--◇Up to X_{Tci*}N_{CORESET-Group} TCI states may be activated for one super cell/cell or for one BWP of one super cell/cell in total. NC_{ORESET-Group} may indicate the number of CORESET groups in one super cell/cell or in one BWP of one super cell/cell.
--◇At least one of X_{Tci}, N_{Trp}, N_{Cell}, Y_{Tci-perTrp}, Y_{Tci-perCell}, N_{CORESET-Group}, Y_{Tci-perTciGroup}, N_{TciGroup}, N_{TciGroup-perTrpGroup}, N_{TrpGroup}, N_{TciGroup-perCellGroup}, and N_{CellGroup} may be defined in a specification, provided by RRC, or reported as UE capability.
   - ◇At least one of the following features may be applied to the above Assumption 2.
--◇A plurality of TCI states activated by the MAC CE for one CORESET group may be associated with SSBs/CSI-RSs of a plurality of different PCIs. A group of TCI states applied to single DCI based joint transmission may be associated with SSBs/CSI-RSs of a plurality of different PCIs.
--◇A plurality of TCI states associated with up to N_{Cell} different PCIs may be activated for one CORESET group.
--◇A plurality of TCI states associated with up to N different PCIs may be activated for one super cell/cell. N may be N_{Cell} or N_{Cell*}N_{CORESET-Group}.
--◇In a case where a plurality of TCI states of the N PCIs are activated, the N PCIs may include one serving cell PCI and N-1 additional PCIs different from the serving cell PCI, or may be N additional PCIs different from the serving cell PCI.
--◇Variation: A plurality of TRPs may be associated with one PCI. A plurality of TCI states activated by the MAC CE for one CORESET group may be associated with SSBs/CSI-RSs of a plurality of different PCIs. One group of TCI states applied to single DCI based joint transmission may be associated with SSB/CSI-RS of the same one PCI.
--◇Variation: A plurality of TRPs may be associated with one PCI. A plurality of TCI states activated by the MAC CE for one CORESET group may be associated with SSB/CSI-RS of the same one PCI. One group of TCI states applied to single DCI based joint transmission may be associated with SSB/CSI-RS of the same one PCI.

### <<Application of Other Embodiments>>

The MAC CE signaling structure, and the mapping between the TCI state activated by the MAC CE and the codepoint of the TCI field in the DCI may make use of Embodiment 2/3/4 by applying Embodiment 2/3/4 for each CORESET group.

According to this embodiment, even if the association between the cell and the TRP is changed, the UE may be properly configured/indicated for the TCI state for single or a plurality of TRPs/sub-cells based on single DCI or multi-DCI.

### <Embodiment 6>

This embodiment relates to MAC CE overhead.

To reduce MAC CE overhead, the following method may be applied to at least one of Embodiments 1 to 5:

### <<Update of Subset of Active TCI State>>

The MAC CE command (activation MAC CE, activation command) may update the subset of TCI states for one super cell/cell or for one TRP/sub-cell of one super cell/cell. Other TCI states activated by previous MAC CE commands may be maintained. This embodiment may follow at least one of the following options.

### ◇Option 1

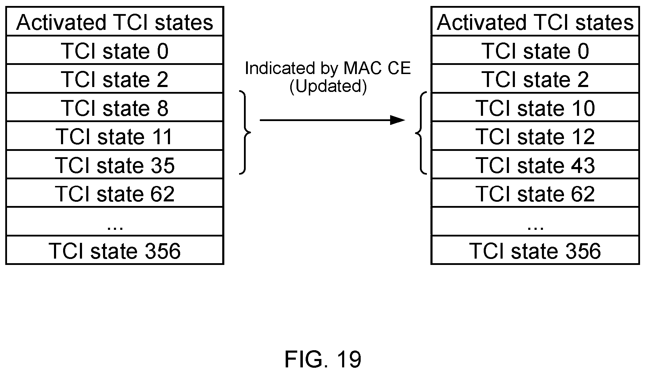

The subset of the activated TCI states may be replaced with a new subset of the activated TCI states. In the example in Fig. 19, the MAC CE indicates TCI states (TCI state IDs) 10, 12, and 43 for the third, fourth, and fifth TCI states (TCI states corresponding to codepoints 2, 3, and 4) among the plurality of activated TCI states. In response to receiving the MAC CE, the UE updates the indicated active TCI states and maintains (does not update) active TCI states other than the indicated TCI states.

### ◇Option 2

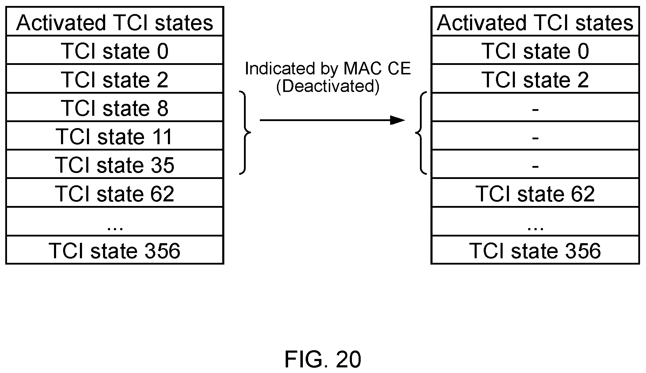

The subset of the activated TCI states may be updated to be deactivated (released). In the example in Fig. 20, the MAC CE indicates deactivation of the third, fourth, and fifth TCI states (TCI states corresponding to the codepoints 2, 3, and 4) among the plurality of activated TCI states. In response to receiving the MAC CE, the UE deactivates the indicated TCI states and maintains active TCI states other than the indicated TCI states.

### ◇Option 3

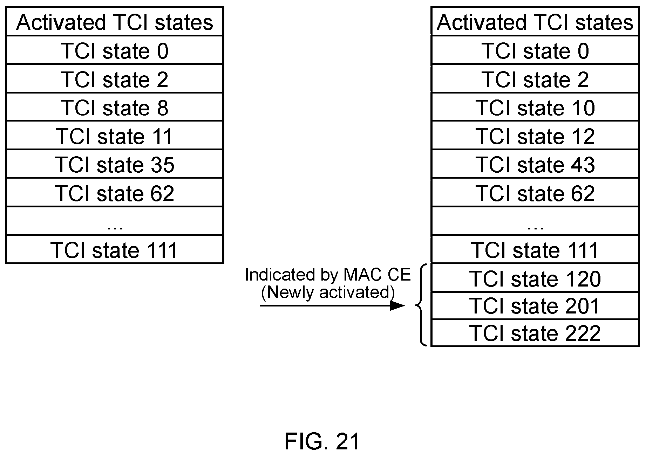

A new subset of TCI states is activated and the previously activated TCI states may remain activated. In the example in Fig. 21, the MAC CE indicates TCI states (TCI state IDs) 120, 201, and 222. In response to receiving the MAC CE, the UE adds the indicated TCI states (associates the indicated TCI states with the additional codepoints) and maintains active TCI states other than the indicated TCI states.

### <<Indication Content of Subset>>

The indication of the subset may follow at least one of the following several options:

### ◇Option 1

The MAC CE indicates a subset of the TCI states. For example, the MAC CE may indicate a subset of TCI states including an (i+1)-th activated TCI state, or a subset of TCI states including (i+1)-th to (i+L)-th activated TCI states, or a subset of TCI states including {i+1, j+1, k+1,...}-th activated TCI states.

### ◇Option 2

The MAC CE indicates a subset of codepoints. For example, the MAC CE may indicate the (i+1)-th codepoint i, or the (i+L)-th codepoint i+L-1 from the (i+1)-th codepoint i, or the {i+1, j+1, k+1,...}-th codepoints {i, j, k,...}. The subset of TCI states mapped to the indicated subset of codepoints may be updated.

According to this embodiment, even if the association between the cell and the TRP is changed, the UE can be properly configured/indicated for the TCI state while suppressing the overhead.

### <Supplement>

### [Notification of Information to UE]

The notification of any information to the UE (from a network (NW) (for example, a base station (BS))) (in other words, reception of any information from the BS at the UE) in the above embodiments may be performed by using physical layer signaling (for example, DCI), higher layer signaling (for example, RRC signaling, MAC CE), a specific signal/channel (for example, PDCCH, PDSCH, reference signal), or a combination thereof.

In a case where the notification is performed by the MAC CE, the MAC CE may be identified by a new logical channel ID (LCID) which is not specified in the existing standard being included in the MAC subheader.

In a case where the notification is performed by the DCI, the notification may be performed by a specific field of the DCI, a radio network temporary identifier (RNTI) used for scrambling cyclic redundancy check (CRC) bits provided to the DCI, a format of the DCI, or the like.

Furthermore, the notification of any information to the UE in the above embodiments may be performed periodically, semi-persistent, or aperiodically.

### [Notification of Information from UE]

The notification of any information from the UE (to the NW) (in other words, sending/reporting any information to the BS at the UE) in the above embodiments may be performed by using physical layer signaling (for example, UCI), higher layer signaling (for example, RRC signaling, MAC CE), a specific signal/channel (for example, PUCCH, PUSCH, PRACH, reference signal), or a combination thereof.

In a case where the notification is performed by the MAC CE, the MAC CE may be identified by a new LCID that is not defined in the existing standard being included in the MAC subheader.

In a case where the notification is performed by the UCI, the notification may be transmitted using a PUCCH or a PUSCH.

Furthermore, the notification of any information from the UE in the above embodiments may be performed periodically, semi-persistently, or aperiodically.

### [Application of Each Embodiment]

At least one of the above embodiments may be applied in a case where a specific condition is satisfied. The specific condition may be defined in the standard, or may be reported to the UE/BS by using higher layer signaling/physical layer signaling.

The specific condition may indicate at least one of the following:
◇Configuring the enabling of at least one of the above embodiments

At least one of the above embodiments may be applied only to a UE that has reported a specific UE capability or supports the specific UE capability.

The specific UE capability may indicate at least one of the following:
◇Supporting specific
   processing/operation/control/information for at least one of the above embodiments
◇The UE supports cell free.
◇The UE supports transmission of a single TRP/subcell (single TRP transmission) in cell free.
◇The UE supports joint transmission of a plurality of TRPs/sub-cells based on single DCI in cell free (single DCI based multi-TRP joint transmission).
◇The UE supports joint transmission (multi-DCI based multi-TRP joint transmission) of a plurality of TRPs/sub-cells based on multi-DCI in cell free.

In addition, the specific UE capability may be a capability applied over the entire frequency (commonly regardless of the frequency), a capability for each frequency (for example, one or a combination of cells, bands, band combinations, BWPs, component carriers, and the like), a capability for each frequency range (for example, Frequency Range 1 (FR1), FR2, FR3, FR4, FR5, FR2-1, and FR2-2), a capability for each subcarrier spacing (SCS), or a capability for each feature set (FS) or feature set per component-carrier (FSPC).

In addition, the above specific UE capability may be a capability that is applied across all duplex systems (commonly regardless of the duplex system) or a capability of each duplex system (for example, time division duplex (TDD) and frequency division duplex (FDD)).

In addition, at least one of the above embodiments may be applied in a case where the UE is configured/activated/triggered with specific information related to the above embodiments (or performing the operations of the above embodiments) by higher layer signaling/physical layer signaling,. The specific information may indicate at least one of the following:
◇Information indicating enabling/disabling of the operation of the above embodiment
◇RRC parameter for a specific release (for example, Rel. 18/19) The RRC parameter may have a name in which "r18"/"r19" is added to the name of the existing RRC parameter.

In a case where the UE does not support at least one of the above specific UE capabilities or is not configured with the above specific information, for example, the operation of Rel. 15/16 may be applied.

### (Supplementary Notes)

The following invention is appended to an embodiment of the present disclosure.

### [Supplementary Note 1]

A terminal including:
a receiving section that receives one or more commands indicating a plurality of transmission configuration indicator (TCI) states, and receives downlink control information indicating one TCI state among the plurality of TCI states; and
a control section that controls reception or transmission using the one TCI state,
in which the plurality of TCI states are associated with a plurality of cell identifiers.

### [Supplementary Note 2]

The terminal according to Supplementary Note 1, in which the one or more commands are one command indicating the plurality of TCI states.

### [Supplementary Note 3]

The terminal according to Supplementary Note 1 or 2, in which the one or more commands are a plurality of commands respectively associated with the plurality of cell identifiers.

### [Supplementary Note 4]

The terminal according to any one of Supplementary Notes 1 to 3, in which the receiving section receives a plurality of lists respectively corresponding to the plurality of cell identifiers, and the plurality of TCI states are included in the plurality of lists.

### (Supplementary Notes)

The following invention is appended to an embodiment of the present disclosure.

### [Supplementary Note 1]

A terminal including:
a receiving section that receives one or more commands indicating a plurality of transmission configuration indicator (TCI) states, and receives one piece of downlink control information indicating two or more TCI states among the plurality of TCI states; and
a control section that controls reception or transmission using the two or more TCI states,
in which the plurality of TCI states are associated with a plurality of cell identifiers.

### [Supplementary Note 2]

The terminal according to Supplementary Note 1, in which the one or more commands are one command indicating the plurality of TCI states.

### [Supplementary Note 3]

The terminal according to Supplementary Note 1 or 2, in which the one or more commands are a plurality of commands respectively associated with the plurality of cell identifiers.

### [Supplementary Note 4]

The terminal according to any one of Supplementary Notes 1 to 3, in which the receiving section receives a plurality of lists respectively corresponding to the plurality of cell identifiers, and the plurality of TCI states are included in the plurality of lists.

### (Supplementary Notes)

The following invention is appended to an embodiment of the present disclosure.

### [Supplementary Note 1]

A terminal including:
a receiving section that receives a plurality of commands indicating a plurality of transmission configuration indicator (TCI) states associated with a plurality of groups of resource sets for monitoring a downlink control channel, and receives one or more downlink control information in one or more groups of the plurality of groups; and
a control section that controls reception or transmission using one or more TCI states among the plurality of TCI states, the one or more TCI states being indicated by the one or more downlink control information,
in which the plurality of groups are associated with a plurality of cell identifiers.

### [Supplementary Note 2]

The terminal according to Supplementary Note 1, in which
one group in the plurality of groups is associated with a cell identifier in the plurality of cell identifiers, and
the one or more downlink control information are one piece of downlink control information indicating one TCI state.

### [Supplementary Note 3]

The terminal according to Supplementary Note 1 or 2, in which
one group in the plurality of groups is associated with two or more cell identifiers in the plurality of cell identifiers, and
the one or more downlink control information are one piece of downlink control information indicating one TCI state.

### [Supplementary Note 4]

The terminal according to any one of Supplementary Notes 1 to 3, in which
one group in the plurality of groups is associated with two or more cell identifiers in the plurality of cell identifiers, and
the one or more downlink control information are two or more downlink control information respectively indicating two or more TCI states.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

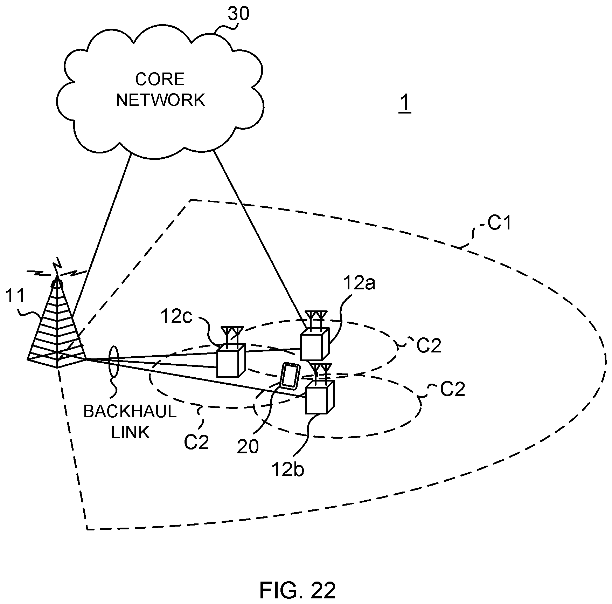

Fig. 22 is a diagram illustrating an example of a schematic configuration of the radio communication system according to one embodiment. A radio communication system 1 (which may be simply referred to as a communication system 1) may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency band (frequency range 1 (FR1)) or a second frequency band (frequency range 2 (FR2)). The macro cell C1 may be included in the FR1, and the small cell C2 may be included in the FR2. For example, the FR1 may be a frequency band of 6 GHz or less (sub-6 GHz), and the FR2 may be a frequency band higher than 24 GHz (above-24 GHz). It is noted that the frequency bands, definitions, and the like of the FR1 and FR2 are not limited thereto, and, for example, the FR1 may correspond to a frequency band higher than the FR2.

Further, the user terminal 20 may perform communication on each CC using at least one of time division duplex (TDD) and frequency division duplex (FDD).

The plurality of base stations 10 may be connected to each other in a wired manner (for example, an optical fiber, an X2 interface, or the like in compliance with common public radio interface (CPRI)) or in a radio manner (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), or the like.

The core network 30 may include, for example, network functions (NF)) such as a user plane function (UPF), an access and mobility management function (AMF), a session management function (SMF), a unified data management (UDM), an application function (AF), a data network (DN), a location management function (LMF), and operation, administration, and maintenance (management) (OAM)). Note that a plurality of functions may be provided by one network node. Furthermore, communication with an external network (for example, the Internet) may be performed via the DN.

The user terminal 20 may be a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. It is noted that in the radio communication system 1, another radio access method (for example, another single carrier transmission method or another multi-carrier transmission method) may be used as the UL and DL radio access method.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. The user data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH and the PUSCH.

It is noted that the DCI that schedules the PDSCH may be referred to as DL assignment, DL DCI, or the like, and the DCI that schedules the PUSCH may be referred to as UL grant, UL DCI, or the like. It is noted that the PDSCH may be interchangeable with DL data, and the PUSCH may be interchangeable with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor CORESET associated with a given search space based on search space configuration.

One search space may correspond to a PDCCH candidate corresponding to one or more aggregation levels. One or more search spaces may be referred to as a search space set. It is noted that "search space", "search space set", "search space configuration", "search space set configuration", "CORESET", "CORESET configuration", and the like in the present disclosure may be interchangeable with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), and scheduling request (SR) may be transmitted on the PUCCH. A random access preamble for establishing connection with a cell may be transmitted on the PRACH.

It is noted that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) and a secondary synchronization signal (SSS). A signal block including the SS (PSS or SSS) and the PBCH (and the DMRS for the PBCH) may be referred to as an SS/PBCH block, an SS block (SSB), or the like. It is noted that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminal-specific reference signals (UE-specific Reference Signals)."

### (Base Station)

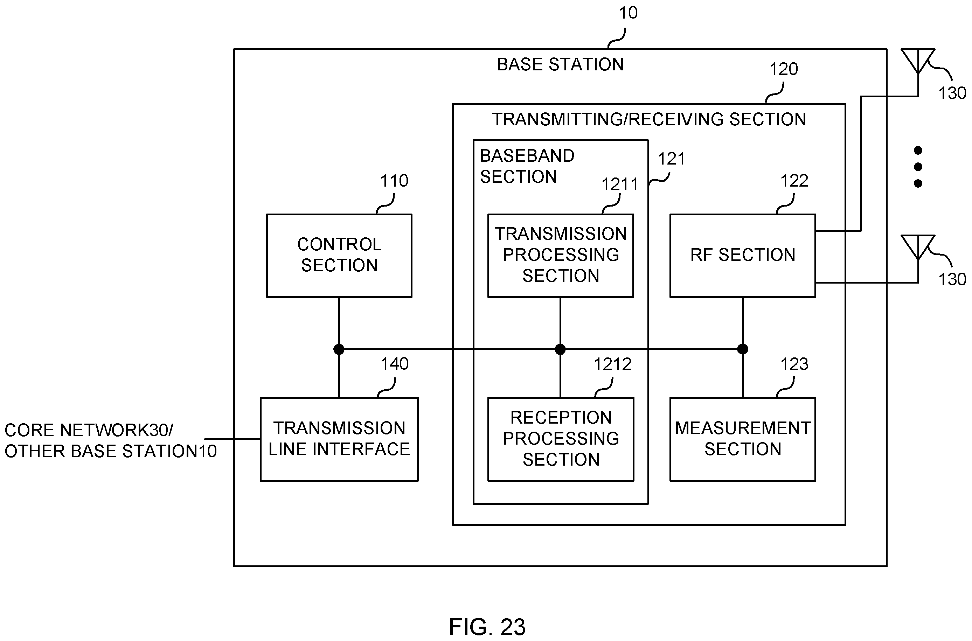

Fig. 23 is a diagram illustrating an example of a configuration of the base station according to one embodiment. The base station 10 includes a control section 110, a transmitting/receiving section 120, a transmitting/receiving antenna 130, and a transmission line interface 140. It is noted that one or more of the control sections 110, one or more of the transmitting/receiving sections 120, one or more of the transmitting/receiving antennas 130, and one or more of the transmission line interfaces 140 may be included.

It is noted that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 may include a controller, a control circuit, or the like, which is described based on common recognition in the technical field to which the present disclosure relates.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 may include a transmitter/receiver, an RF circuit, a baseband circuit, a filter, a phase shifter, a measurement circuit, a transmission/reception circuit, and the like, which are described based on common recognition in the technical field to which the present disclosure relates.

The transmitting/receiving section 120 may be constituted as an integrated transmitting/receiving section, or may include a transmitting section and a receiving section. The transmitting section may include the transmission processing section 1211 and the RF section 122. The receiving section may include the reception processing section 1212, the RF section 122, and the measurement section 123.

The transmitting/receiving antenna 130 may include an antenna described based on common recognition in the technical field to which the present disclosure relates, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam or a reception beam using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmitting/receiving antenna 130.

Meanwhile, the transmitting/receiving section 120 (RF section 122) may perform amplification, filtering processing, demodulation to a baseband signal, and the like on the signal in the radio frequency band received by the transmitting/receiving antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. A measurement result may be output to the control section 110.

The transmission line interface 140 may transmit and receive signals (backhaul signaling) to and from devices (for example, a network node that provides the NFs) included in the core network 30, other base stations 10, and the like, and may perform acquisition, transmission, and the like of user data (user plane data), control plane data, and the like for the user terminal 20.

It is noted that, the transmitting section and the receiving section of the base station 10 in the present disclosure may include at least one of the transmitting/receiving section 120, the transmitting/receiving antenna 130, and the transmission line interface 140.

The transmitting/receiving section 120 may transmit one or more commands indicating a plurality of transmission configuration indicator (TCI) states, and may transmit downlink control information indicating one TCI state among the plurality of TCI states. The control section 110 may control reception or transmission using the one TCI state. The plurality of TCI states may be associated with a plurality of cell identifiers.

The transmitting/receiving section 120 may transmit one or more commands indicating a plurality of transmission configuration indicator (TCI) states, and may transmit one piece of downlink control information indicating two or more TCI states among the plurality of TCI states. The control section 110 may control reception or transmission using the two or more TCI states. The plurality of TCI states may be associated with a plurality of cell identifiers.

The transmitting/receiving section 120 may transmit a plurality of commands indicating a plurality of transmission configuration indicator (TCI) states associated with a plurality of groups of resource sets for monitoring a downlink control channel, and may transmit one or more downlink control information in one or more groups of the plurality of groups. The controller 110 may control reception or transmission using one or more TCI states indicated by the one or more downlink control information among the plurality of TCI states. The plurality of groups may be associated with a plurality of cell identifiers.

### (User Terminal)

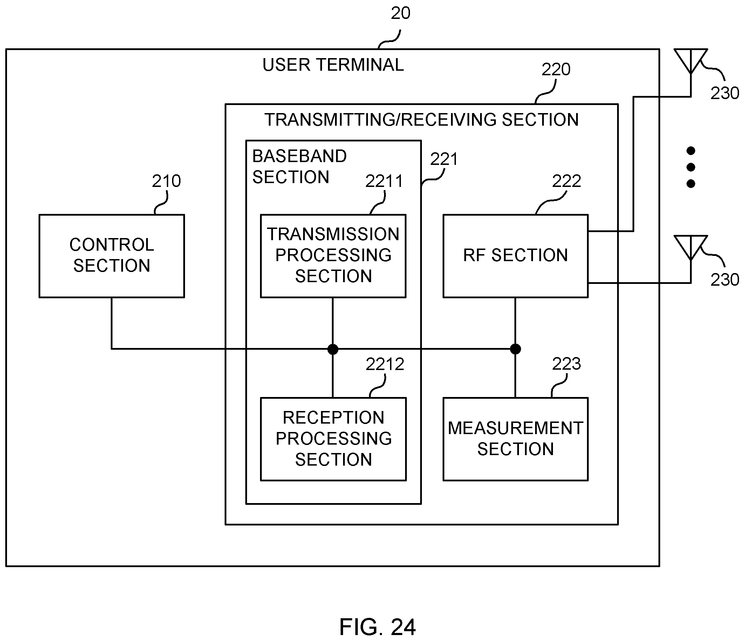

Fig. 24 is a diagram illustrating an example of a configuration of the user terminal according to one embodiment. The user terminal 20 includes a control section 210, a transmitting/receiving section 220, and a transmitting/receiving antenna 230. It is noted that one or more of the control sections 210, one or more of the transmitting/receiving sections 220, and one or more of the transmitting/receiving antennas 230 may be included.

It is noted that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described based on common recognition in the technical field related to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described based on common recognition in the technical field related to the present disclosure.

The transmitting/receiving section 220 may be constituted as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmitting/receiving antenna 230 may include an antenna that is described based on common recognition in the technical field related to the present disclosure, for example, an array antenna or the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

It is noted that whether to apply DFT processing may be determined based on configuration of transform precoding. In a case where transform precoding is enabled for a given channel (for example, PUSCH), the transmitting/receiving section 220 (transmission processing section 2211) may perform DFT processing as the transmission processing in order to transmit the channel using a DFT-s-OFDM waveform, and otherwise, DFT processing need not be performed as the transmission processing.

The transmitting/receiving section 220 (RF section 222) may perform modulation to a radio frequency band, filtering processing, amplification, and the like on the baseband signal, to transmit a signal in the radio frequency band via the transmitting/receiving antenna 230.

Meanwhile, the transmitting/receiving section 220 (RF section 222) may perform amplification, filtering processing, demodulation to a baseband signal, and the like on the signal in the radio frequency band received by the transmitting/receiving antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. A measurement result may be output to the control section 210.

Note that the measurement section 223 may derive channel measurement for CSI calculation on the basis of the channel measurement resource. The channel measurement resource may be, for example, a non-zero power (NZP) CSI-RS resource. In addition, the measurement section 223 may derive interference measurement for calculating CSI on the basis of the interference measurement resource. The interference measurement resource may be at least one of an NZP CSI-RS resource for interference measurement, a CSI-interference measurement (IM) resource, or the like. Note that CSI-IM may be referred to as interference management (IM) or may be read as a zero power (ZP) CSI-RS. In the present disclosure, the CSI-RS, the NZP CSI-RS, the ZP CSI-RS, the CSI-IM, the CSI-SSB, and the like may be interchangeable with each other.

It is noted that the transmitting section and the receiving section of the user terminal 20 in the present disclosure may include at least one of the transmitting/receiving section 220 and the transmitting/receiving antenna 230.

The transmitting/receiving section 220 may receive one or more commands indicating a plurality of transmission configuration indicator (TCI) states, and may receive downlink control information indicating one TCI state among the plurality of TCI states. The control section 210 may control reception or transmission (for example, DL/UL transmission of a single TRP/sub-cell) using the one TCI state. The plurality of TCI states may be associated with a plurality of cell identifiers (for example, an identifier corresponding to the TRP/sub-cell).

The one or more commands may be one command indicating the plurality of TCI states.

The one or more commands may be a plurality of commands respectively associated with the plurality of cell identifiers.

The transmitting/receiving section 220 may receive a plurality of lists respectively corresponding to the plurality of cell identifiers, and the plurality of TCI states may be included in the plurality of lists.

The transmitting/receiving section 220 may receive one or more commands indicating a plurality of transmission configuration indicator (TCI) states, and may receive one piece of downlink control information indicating two or more TCI states among the plurality of TCI states. The control section 210 may control reception or transmission (for example, DL/UL joint transmission of a plurality of TRPs/sub-cells based on single DCI) using the two or more TCI states. The plurality of TCI states may be associated with a plurality of cell identifiers.

The one or more commands may be one command indicating the plurality of TCI states.

The one or more commands may be a plurality of commands respectively associated with the plurality of cell identifiers.

The transmitting/receiving section 220 may receive a plurality of lists respectively corresponding to the plurality of cell identifiers, and the plurality of TCI states may be included in the plurality of lists.

The transmitting/receiving section 220 may receive a plurality of commands indicating a plurality of transmission configuration indicator (TCI) states associated with a plurality of groups (for example, a CORESET group or a CORESET pool) of resource sets (for example, a CORESET) for monitoring a downlink control channel, and may receive one or more downlink control information in one or more groups of the plurality of groups. The control section 210 may control reception or transmission (for example, DL/UL joint transmission of a plurality of TRPs/sub-cells based on multi-DCI) using one or more TCI states among the plurality of TCI states indicated by the one or more downlink control information. The plurality of groups may be associated with a plurality of cell identifiers.

One group in the plurality of groups may be associated with a cell identifier in the plurality of cell identifiers. The one or more downlink control information may be one piece of downlink control information indicating one TCI state.

One group in the plurality of groups may be associated with two or more cell identifiers in the plurality of cell identifiers. The one or more downlink control information may be one piece of downlink control information indicating one TCI state.

One group in the plurality of groups may be associated with two or more cell identifiers in the plurality of cell identifiers. The one or more downlink control information may be two or more downlink control information respectively indicating two or more TCI states.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

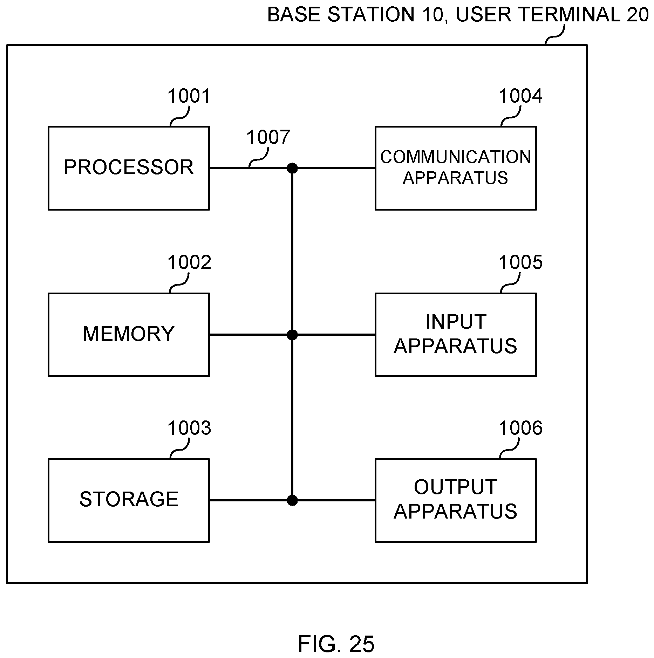

For example, a base station, a user terminal, and so on according to one embodiment of the present disclosure may function as a computer that executes the processes of the radio communication method of the present disclosure. FIG. 25 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

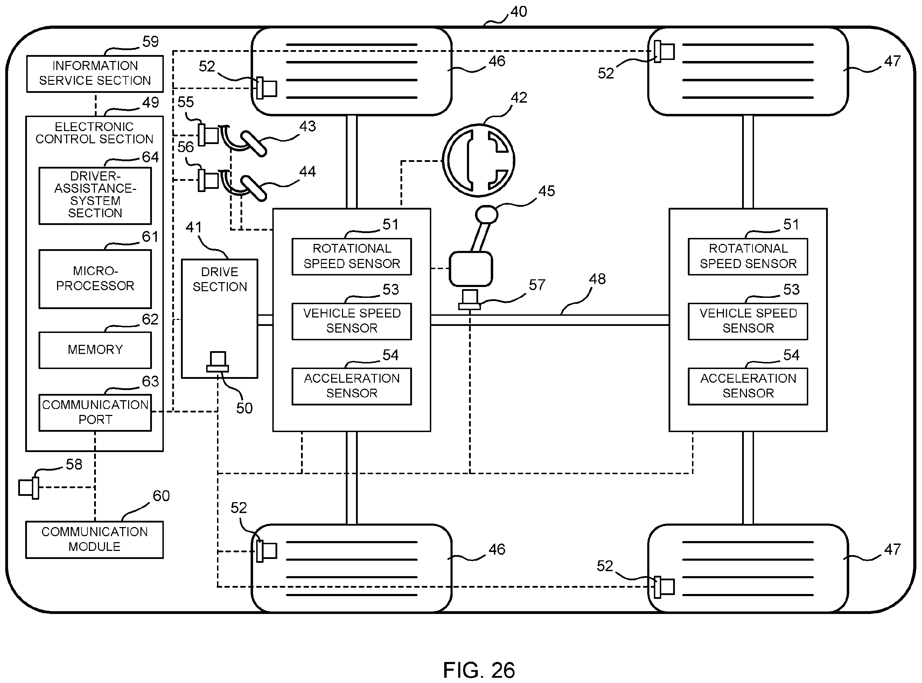

FIG. 26 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s)..." ("..." may be expressed using, for example, a that-clause, a to-infinitive, or the like) may be used interchangeably with "be expected...". "Does not expect..." may be used interchangeably with "be not expected...". Furthermore, "an apparatus A is not expected..." may be used interchangeably with "an apparatus B other than the apparatus A does not expect... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives one or more commands indicating a plurality of transmission configuration indicator (TCI) states, and receives downlink control information indicating one TCI state among the plurality of TCI states; and
a control section that controls reception or transmission using the one TCI state,
wherein the plurality of TCI states are associated with a plurality of cell identifiers.

2. The terminal according to claim 1, wherein the one or more commands are one command indicating the plurality of TCI states.

3. The terminal according to claim 1, wherein the one or more commands are a plurality of commands respectively associated with the plurality of cell identifiers.

4. The terminal according to claim 1, wherein the receiving section receives a plurality of lists respectively corresponding to the plurality of cell identifiers, and the plurality of TCI states are included in the plurality of lists.

5. A radio communication method for a terminal, comprising:
a step of receiving one or more commands indicating a plurality of transmission configuration indicator (TCI) states;
a step of receiving downlink control information indicating one TCI state among the plurality of TCI states; and
a step of controlling reception or transmission using the one TCI state,
wherein the plurality of TCI states are associated with a plurality of cell identifiers.

6. A base station comprising:
a transmitting section that transmits one or more commands indicating a plurality of transmission configuration indicator (TCI) states, and transmits downlink control information indicating one TCI state among the plurality of TCI states; and
a control section that controls reception or transmission using the one TCI state,
wherein the plurality of TCI states are associated with a plurality of cell identifiers.
